# EUROPEAN PATENT APPLICATION

(11) **EP 1 686 139 A1**
(43) Date of publication of application: **02.08.2006**
(21) Application number: 04818882.5
(22) Date of filing: 15.11.2004
(51) Int. Cl.: C08F 32/00, C08G 61/08

(54) **NOVEL (CO)POLYMER, PROCESS FOR PRODUCING THE SAME, AND PROCESS FOR PRODUCING CARBOXYLATED (CO)POLYMER**

(30) Priority: 18.11.2003 JP 2003387656
(71) Applicant: JSR Corporation, Tokyo 104-0045 (JP)
(72) Inventor: HAYAKAWA, Toshiyuki, JSR Corporation, Tokyo 104-0045 (JP); HATTORI, Iwakazu, JSR Corporation, Tokyo 104-0045 (JP); OOKUBO, Akihiko, JSR Corporation, Tokyo 104-0045 (JP)
(74) Representative: TBK-Patent
(86) International application number: PCT/JP2004/016944
(87) International publication number: WO 2005/049668

(57) **Abstract**

Disclosed herein are a novel (co)polymer having a silyl carboxylate residue, a production process thereof and a production process of a carboxyl group-containing (co)polymer.

A (co)polymer of the invention comprises a structural unit represented by the following general formula (1). Another (co)polymer of the invention comprises a structural unit represented by the following general formula (2). 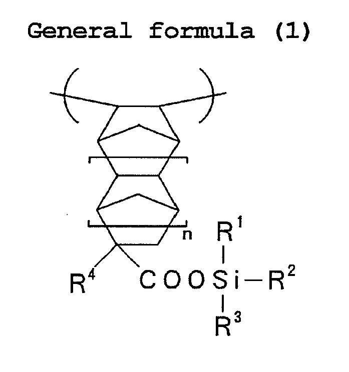 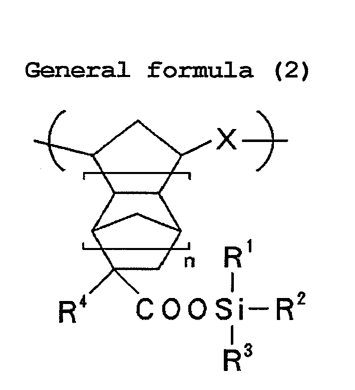 wherein n is 0 or 1, R¹, R², R³ and R⁴ mean, independently of one another, a hydrogen atom, halogen atom or monovalent organic group, and X denotes an ethylene or vinylene group.

## Description

### TECHNICAL FIELD

The present invention relates to a novel (co)polymer having a specific silyl carboxylate residue, a production process thereof and a production process of a carboxyl group-containing (co)polymer.

### BACKGROUND ART

Transparent resins have heretofore been used as materials for automobile parts, lighting equipments, electric parts, etc., of which ordinary transparency is required, and polycarbonate resins and acrylic resins are known as such transparent resins.
With the demand for miniaturization, weight saving and high-density packaging of electronic apparatus in recent years, it is advanced to use a resin as an optical material, electronic material or the like. Such a resin is required to be excellent in properties such as thermal stability, mechanical strength, moisture absorption resistance, dimensional stability and solvent resistance in addition to optical transparency. In a liquid crystal display device, in which, for example, a glass substrate has heretofore been used, a resin substrate has come to be used in recent years for the purpose of saving weight lessening breakage upon falling. However, the resin used is required to have very high thermal stability from the viewpoint of the production process of the liquid crystal display device.
However, the acrylic resins involve problems in points of thermal resistance and water resistance (low water absorption property) and the like though they are excellent in transparency. On the other hand, the polycarbonate resins involve such problems that the index of birefringence is great though they are superb in thermal resistance and water resistance to the acrylic resins.
Recently, attention has been attracted to cycloolefin polymer resins as resins excellent in various properties such as transparency, water resistance, low birefringence and thermal resistance. As such cycloolefin polymer reins, have heretofore been proposed resins of various structures, such as addition (co)polymers and ring-opened (co)polymers of cycloolefin compounds, and hydrogenated products thereof (see, for example, Patent Art. 1 to Patent Art. 6).

On the other hand, Olefin copolymer elastomers such as ethylene/α-olefin copolymer elastomers and ethylene/α-olefin/nonconjugated polyene terpolymer elastomers are widely used as materials for automotive parts, mechanical parts, civil engineering and construction materials, etc. because they are elastomeric materials excellent in thermal resistance and weather resistance. The olefin copolymer elastomers are also widely used as modifiers for resins such as polypropylene and polyethylene.
However, such olefin copolymer elastomers involve problems that since they have neither polar group nor functional group in their molecular structures, their adhesiveness to metals, adhesiveness to and compatibility with other elastomers or resins than polyolefins are low, and so molded or formed products obtained from such elastomers are low in coating property and printability.
For such reasons, there have been proposed olefin copolymers with a functional group such as a carboxyl group or amino group introduced by using a cycloolefin compounds having such a functional group as a monomer (see, for example, Patent Art. 7 to Patent Art. 10).

However, no (co)polymer making use of a cycloolefin compound having a silyl carboxylate residue as a substituent group is known.
Since the silyl carboxylate residue is easily converted to a carboxyl group by subjecting the ester groupester group thereof to a hydrolyzing treatment, the cycloolefin compound having the silyl carboxylate residue is (co)polymerized, and the resultant (co)polymer is hydrolyzed, whereby a (co)polymer having a carboxyl group may be produced while avoiding side reactions. Therefore, such cycloolefin compound is advantageous.

Patent Art. 1: Japanese Patent Application Laid-Open No. 132625/1989;
Patent Art. 2: Japanese Patent Application Laid-Open No. 132626/1989;
Patent Art. 3: Japanese Patent Application Laid-Open No. 133413/1990;
Patent Art. 4: Japanese Patent Application Laid-Open No. 120816/1986;
Patent Art. 5: Japanese Patent Application Laid-Open No. 115912/1986;
Patent Art. 6: Japanese Patent Application Laid-Open No. 218726/1988;
Patent Art. 7: Japanese Patent Publication No. 43275/1974;
Patent Art. 8: Japanese Patent Application Laid-Open No. 259012/1989;
Patent Art. 9: Japanese Patent Application Laid-Open No. 54009/1989;
Patent Art. 10: Japanese Patent Application Laid-Open (KOHYO) No. 503963/1992 (though PCT route).

### DISCLOSURE OF THE INVENTION

It is a first object of the present invention to provide a novel (co)polymer having a silyl carboxylate residue and a production process thereof.
A second object of the present invention is to provide a process for producing a carboxyl group-containing (co)polymer from the above (co)polymer.

A (co)polymer according to the present invention comprises a structural unit represented by the following general formula (1):

[Chemical 1]

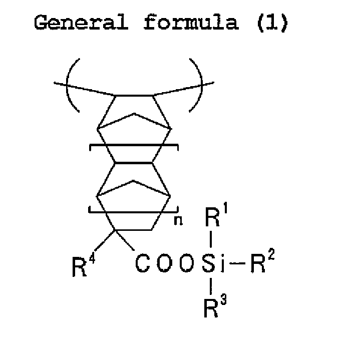

wherein n is 0 or 1, and R¹, R², R³ and R⁴ mean, independently of one another, a hydrogen atom, halogen atom or monovalent organic group.

A copolymer according to the present invention comprises the structural unit represented by the above general formula (1), a structural unit derived from ethylene and a structural unit derived from an α-olefin having 3 to 12 carbon atoms, and a structural unit derived from a nonconjugated polyene optionally used.

In such a copolymer, it may be preferable that the content of the structural unit represented by the general formula (1) be 0.01 to 30 mol%, the content of the structural unit derived from ethylene be 40 to 90 mol%, the content of the structural unit derived from the α-olefin having 3 to 12 carbon atoms be 5 to 60 mol%, and the content of the structural unit derived from the nonconjugated polyene be 0 to 12 mol%.

Another (co)polymer according to the present invention comprises a structural unit represented by the following general formula (2):

[Chemical 2]

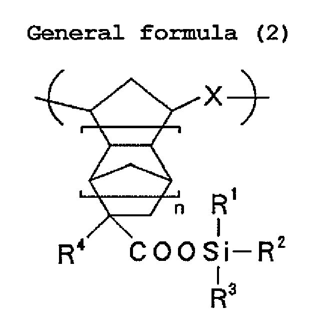

wherein n is 0 or 1, R¹, R², R³ and R⁴ mean, independently of one another, a hydrogen atom, halogen atom or monovalent organic group, and X denotes an ethylene or vinylene group.

Another copolymer according to the present invention comprises the structural unit represented by the above general formula (2) and a structural unit derived from any other cycloolefin compound.

In the (co)polymers according to the present invention, R¹, R² and R³ in the above general formula (1) or the general formula (2) may preferably be, independently of one another, a hydrogen atom or a hydrocarbon group having 1 to 20 carbon atoms.
In the above general formula (1) or the general formula (2), R⁴ may preferably be a methyl group.
In the general formula (1) or the general formula (2), n may preferably be 1.

A process according to the present invention for producing a (co)polymer comprises the step of addition-polymerizing a monomer comprising at least a compound represented by the following general formula (3):

[Chemical 3]

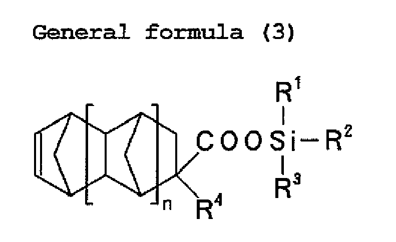

wherein n is 0 or 1, and R¹, R², R³ and R⁴ mean, independently of one another, a hydrogen atom, halogen atom or monovalent organic group.

A process according to the present invention for producing a copolymer comprises the step of addition-polymerizing the compound represented by the above general formula (3), ethylene and an α-olefin having 3 to 12 carbon atoms, and a nonconjugated polyene optionally used.

A process according to the present invention for producing a (co)polymer comprises the step of ring-opening-polymerizing a monomer comprising at least the compound represented by the above general formula (3).

A process according to the present invention for producing a copolymer comprises the step of ring-opening-polymerizing a monomer comprising the compound represented by the above general formula (3) and another cycloolefin compound copolymerizable with this compound.

A process according to the present invention for producing a carboxyl group-containing (co)polymer comprises the step of subjecting an ester groupester group of the above-described (co)polymer to a hydrolyzing treatment.

According to the (co)polymers of the present invention, effects characteristic of the silyl carboxylate residue that the (co)polymers have are brought about. For example, the silyl carboxylate residue is easily converted to a carboxyl group by subjecting the ester group thereof to a hydrolyzing treatment.
According to the (co)polymers of the present invention, carboxyl group-containing (co)polymers can be advantageously produced.

### BRIEF DESCRIPTION OF THE DRAWINGS

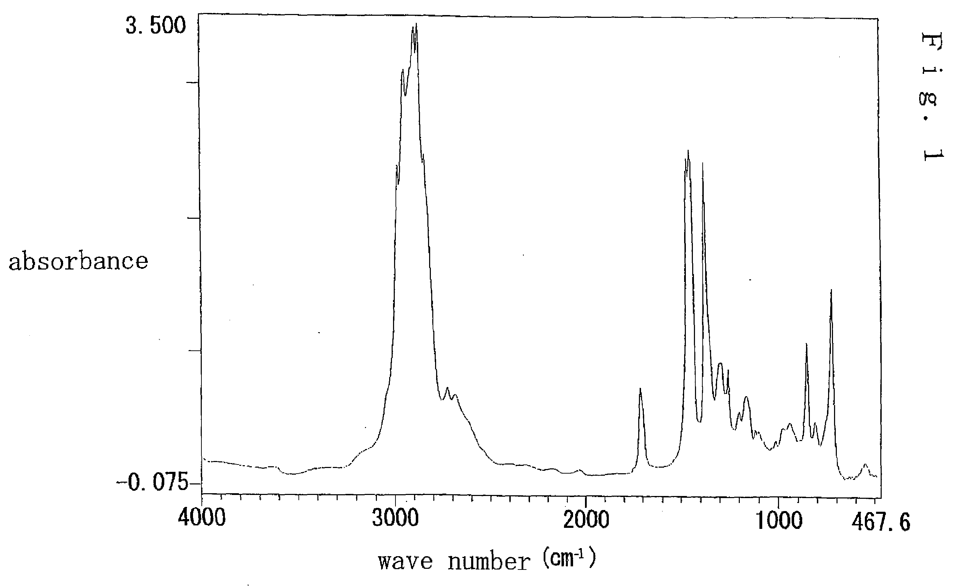

Fig. 1 illustrates an infrared absorption spectrum of a copolymer obtained in Example 1.

### BEST MODE FOR CARRYING OUT THE INVENTION

The embodiments of the present invention will hereinafter be described in details.
The (co)polymer according to the present invention comprises a structural unit (hereinafter referred to as "specific structural unit (1)") represented by the above general formula (1) or a structural unit (hereinafter referred to as "specific structural unit (2)") represented by the above general formula (2). Such a (co)polymer is obtained from a monomer comprising at least a compound (hereinafter also referred to as "specific cycloolefin compound") represented by the above general formula (3).

In the general formulae (1) to (3), R¹ to R³ are, independently of one another, a hydrogen atom, halogen atom or monovalent organic group, preferably a hydrogen atom or a hydrocarbon group having 1 to 20 carbon atoms. Specific examples of the hydrocarbon group having 1 to 20 carbon atoms include aliphatic hydrocarbon groups such as methyl, ethyl and butyl groups, alicyclic hydrocarbon groups such as a cyclohexyl group, and aromatic hydrocarbon groups such as a benzyl group.
R⁴ is a hydrogen atom, halogen atom or monovalent organic group, preferably a hydrocarbon group having 1 to 20 carbon atoms, more preferably a methyl group.
The value of the repetitive number n is 0 or 1, preferably 1.
In the general formula (2), X is an ethylene or vinylene group.

As specific examples of the specific cycloolefin compound, may be mentioned:
trimethylsilyl 2-methylbicyclo[2.2.1]hept-5-ene-2-carboxylate,
triethylsilyl 2-methylbicyclo[2.2.1.]hept-5-ene-2-carboxylate,
t-butyldimethylsilyl 2-methylbicyclo[2.2.1]hept-5-ene-2-carboxylate,
tri-n-butylsilyl 2-methylbicyclo[2.2.1]hept-5-ene-2-carboxylate,
n-butyldimethylsilyl 2-methylbicyclo[2.2.1]hept-5-ene-2-carboxylate,
cyclohexyldimethylsilyl 2-methylbicyclo[2.2.1]hept-5-ene-2-carboxylate,
tribenzylsilyl 2-methylbicyclo[2.2.1]hept-5-ene-2-carboxylate,
trimethylsilyl bicyclo[2.2.1]hept-5-ene-2-carboxylate,
triethylsilyl bicyclo[2.2.1]hept-5-ene-2-carboxylate,
t-butyldimethylsilyl bicyclo[2.2.1]hept-5-ene-2-carboxylate,
tri-n-butylsilyl bicyclo[2.2.1]hept-5-ene-2-carboxylate,
n-butyldimethylsilyl bicyclo[2.2.1]hept-5-ene-2-carboxylate,
cyclohexyldimethylsilyl bicyclo[2.2.1]hept-5-ene-2-carboxylate,
tribenzylsilyl bicyclo[2.2.1]hept-5-ene-2-carboxylate,
trimethylsilyl 2-ethylbicyclo[2.2.1]hept-5-ene-2-carboxylate,
triethylsilyl 2-ethylbicyclo[2.2.1]hept-5-ene-2-carboxylate,
t-butyldimethylsilyl 2-ethylbicyclo[2.2.1]hept-5-ene-2-carboxylate,
tri-n-butylsilyl 2-ethylbicyclo[2.2.1]hept-5-ene-2-carboxylate,
n-butyldimethylsilyl 2-ethylbicyclo[2.2.1]hept-5-ene-2-carboxylate,
cyclohexyldimethylsilyl 2-ethylbicyclo[2.2.1]hept-5-ene-2-carboxylate,
tribenzylsilyl 2-ethylbicyclo[2.2.1]hept-5-ene-2-carboxylate,

trimethylsilyl 4-methyltetracyclo[6.2.1.1^{3,6}.0^{2,7}]-dodec-9-ene-4-carboxylate,
triethylsilyl 4-methyltetracyclo[6.2.1.1^{3,6}.0^{2,7}]-dodec-9-ene-4-carboxylate,
t-butyldimethylsilyl 4-methyltetracyclo[6.2.1.1^{3,6}. 0^{2,7}]dodec-9-ene-4-carboxylate,
n-butyldimethylsilyl 4-methyltetracyclo[6.2.1.1^{3,6}. 0^{2,7}]dodec-9-ene-4-carboxylate,
cyclohexyldimethylsilyl 4-methyltetracyclo[6.2.1.1^{3,6}. 0^{2,7}]dodec-9-ene-4-carboxylate,
allyldichlorosilyl 4-methyltetracyclo[6.2.1.1^{3,6}.0^{2,7}]-dodec-9-ene-4-carboxylate,
diallylchlorosilyl 4-methyltetracyclo[6.2.1.1^{3,6}.0^{2,7}]-dodec-9-ene-4-carboxylate,
vinyldimethylsilyl 4-methyltetracyclo[6.2.1.1^{3,6}.0^{2,7}]-dodec-9-ene-4-carboxylate,
chloromethyldimethylsilyl 4-methyltetracyclo-[6.2.1.1^{3,6}.0^{2,7}]dodec-9-ene-4-carboxylate,
t-butylphenylchlorosilyl 4-methyltetracyclo-[6.2.1.1^{3,6}.0^{2,7}]dodec-9-ene-4-carboxylate,
tribenzylsilyl 4-methyltetracyclo[6.2.1.1^{3,6}.0^{2,7}]-dodec-9-ene-4-carboxylate,
dimethylsilyl 4-methyltetracyclo[6.2.1.1^{3,6}.0^{2,7}]-dodec-9-ene-4-carboxylate,

trimethylsilyl tetracyclo[6.2.1.1^{3,6}.0^{2,7}]dodec-9-ene- 4-carboxylate,
triethylsilyl tetracyclo[6.2.1.1^{3,6}.0^{2,7}]dodec-9-ene-4-carboxylate,
t-butyldimethylsilyl tetracyclo[6.2.1.1^{3,6}.0^{2,7}]dodec-9-ene-4-carboxylate,
n-butyldimethylsilyl tetracyclo[6.2.1.1^{3,6}.0^{2,7}] dodec-9-ene-4-carboxylate,
cyclohexyldimethylsilyl tetracyclo[6.2.1.1^{3,6}.0^{2,7}]-dodec-9-ene-4-carboxylate,
allyldichlosilyl tetracyclo[6.2.1.1^{3,6}.0^{2,7}]dodec-9-ene-4-carboxylate,
diallylchlorosilyl tetracyclo[6.2.1.1^{3,6}.0^{2,7}]dodec-9-ene-4-carboxylate,
vinyldimethylsilyl tetracyclo[6.2.1.1^{3,6}.0^{2,7}]dodec-9-ene-4-carboxylate,
chloromethyldimethylsilyl tetracyclo[6.2.1.1^{3,6}.0^{2,7}]-dodec-9-ene-4-carboxylate,
t-butylphenylchlorosilyl tetracyclo[6.2.1.1^{3,6}.0^{2,7}]-dodec-9-ene-4-carboxylate,
tribenzylsilyl tetracyclo[6.2.1.1^{3,6}.0^{2,7}]dodec-9-ene-4-carboxylate,
dimethylsilyl tetracyclo[6.2.1.1^{3,6}.0^{2,7}]dodec-9-ene-4-carboxylate,
trimethylsilyl 4-ethyltetracyclo[6.2.1.1^{3,6}.0^{2,7}]dodec-9-ene-4-carboxylate,
t-butyldimethylsilyl 4-ethyltetracyclo-[6.2.1.1^{3,6}.0^{2,7}]dodec-9-ene-4-carboxylate,
trimethylsilyl 4-chlorotetracyclo[6.2.1.1^{3,6}.0^{2,7}]-dodec-9-ene-4-carboxylate,
t-butyldimethylsilyl 4-chloroltetracyclo-[6.2.1.1^{3,6}.0^{2,7}]dodec-9-ene-4-carboxylate,
trimethylsilyl 4-methoxytetracyclo[6.2.1.1^{3,6}.0^{2,7}]-dodec-9-ene-4-carboxylate, and
t-butyldimethylsilyl 4-methoxytetracyclo-[6.2.1.1^{3,6}.0^{2,7}]dodec-9-ene-4-carboxylate.
These compounds may be used either singly or in any combination thereof.

Among these, those preferred from the viewpoints of polymerizability of the compounds and stability and the like of the resulting (co)polymers are
trimethylsilyl 2-methylbicyclo[2.2.1]hept-5-ene-2-carboxylate,
triethylsilyl 2-methylbicyclo[2.2.1]hept-5-ene-2-carboxylate,
t-butyldimethylsilyl 2-methylbicyclo[2.2.1]hept-5-ene-2-carboxylate,
tri-n-butylsilyl 2-methylbicyclo[2.2.1]hept-5-ene-2-carboxylate,
n-butyldimethylsilyl 2-methylbicyclo[2.2.1]hept-5-ene-2-carboxylate,
cyclohexyldimethylsilyl 2-methylbicyclo[2.2.1]hept-5-ene-2-carboxylate,
tribenzylsilyl 2-methylbicyclo[2.2.1]hept-5-ene-2-carboxylate,
trimethylsilyl 4-methyltetracyclo[6.2.1.1^{3,6}.0^{2,7}]-dodec-9-ene-4-carboxylate,
triethylsilyl 4-methyltetracyclo[6.2.1.1^{3,6}.0^{2,7}]-dodec-9-ene-4-carboxylate,
t-butyldimethylsilyl 4-methyltetracyclo[6.2.1.1^{3,6}. 0^{2,7}]dodec-9-ene-4-carboxylate,
n-butyldimethylsilyl 4-methyltetracyclo[6.2.1.1^{3,6}. 0^{2,7}]dodec-9-ene-4-carboxylate,
cyclohexyldimethylsilyl 4-methyltetracyclo[6.2.1.1^{3,6}. 0^{2,7}]dodec-9-ene-4-carboxylate, and
tribenzylsilyl 4-methyltetracyclo[6.2.1.1^{3,6}.0^{2,7}]-dodec-9-ene-4-carboxylate.
As particularly preferred compounds, may be mentioned:
trimethylsilyl 4-methyltetracyclo[6.2.1.1^{3,6}.0^{2,7}]-dodec-9-ene-4-carboxylate,
triethylsilyl 4-methyltetracyclo[6.2.1.1^{3,6}.0^{2,7}]-dodec-9-ene-4-carboxylate,
t-butyldimethylsilyl 4-methyltetracyclo[6.2.1.1^{3,6}. 0^{2,7}]dodec-9-ene-4-carboxylate,
n-butyldimethylsilyl 4-methyltetracyclo[6.2.1.1^{3,6}. 0^{2,7}]dodec-9-ene-4-carboxylate, and
cyclohexyldimethylsilyl 4-methyltetracyclo[6.2.1.1^{3,6}. 0^{2,7}]dodec-9-ene-4-carboxylate.

Such a specific cycloolefin compound is obtained by, for example, reacting a cycloolefin compound represented by the following general formula (4) with a chlorosilane represented by the following general formula (5) or a silylamine represented by the following general formula (6):

[Chemical 4]

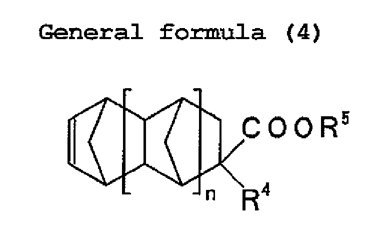

[In the general formula (4), n is 0 or 1, R⁴ means a hydrogen atom, halogen atom or monovalent organic group, and R⁵ denotes a hydrogen atom or alkali metal.]

[Chemical 5]

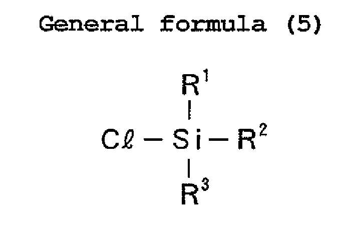

[In the general formula (5), R¹, R² and R³ mean, independently of one another, a hydrogen atom, halogen atom or monovalent organic group.]

[Chemical 6]

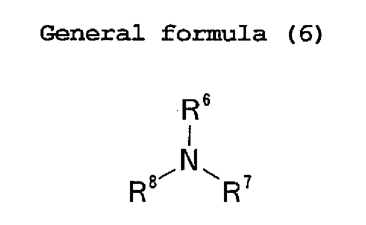

[In the general formula (6), R⁶, R⁷ and R⁸ mean, independently of one another, a hydrogen atom, an alkyl group having 1 to 20 carbon atoms or a group represented by the following general formula (7), with the proviso that at least one of R⁶ to R⁸ is the group represented by the following general formula (7).]

[Chemical 7]

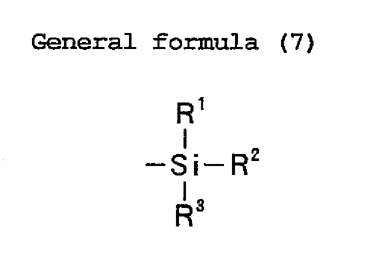

[In the general formula (7), R¹, R² and R³ mean, independently of one another, a hydrogen atom, halogen atom or monovalent organic group.]

As specific examples of the chlorosilane represented by the general formula (5), may be mentioned trimethyl- chlorosilane, t-butyldimethylchlorosilane, n-butyldimethyl- chlorosilane, t-butyldiphenylchlorosilane, t-butylphenyl- dichlorosilane, dimethylchlorosilane, dimethyldichloro- silane, diallyldichlorosilane, allyltrichlorosilane, vinyl- dimethylchlorosilane, tribenzylchlorosilane, hexyldimethyl- chlorosilane and tri-n-butylchlorosilane.
As specific examples of the silylamine represented by the general formula (6), may be mentioned hexamethyldisilazane, 1,3-bis(chloromethyl)tetramethyldisilazane, N,N-dimethylaminotrimethylsilane, N,N-diethylamino-trimethylsilane, nanomethyltrisilazane and 1,1,3,3-tetra-methyldisilazane.

The (co)polymers according to the present invention are addition (co)polymers or ring-opened (co)polymers of a monomer comprising the specific cycloolefin compound, or hydrogenated products thereof. Specifically, the following forms may be mentioned.
(1) Addition polymer (hereinafter referred to as "specific addition polymer") of the specific cycloolefin compound alone.
(2) Addition copolymer (hereinafter referred to as "specific addition copolymer") of the specific cycloolefin compound and a compound (hereinafter referred to as "addition-copolymerizable compound") addition-copolymerizable with this compound.
(3) Ring-opened polymer (hereinafter referred to as "specific ring-opened polymer") of the specific cycloolefin compound alone.
(4) Ring-opened copolymer (hereinafter referred to as "specific ring-opened copolymer") of the specific cycloolefin compound and a compound (hereinafter referred to as "ring-opening-copolymerizable compound") ring-opening-copolymerizable with this compound.
(5) Hydrogenated product (hereinafter referred to as "specific hydrogenated ring-opened (co)polymer") of (3) the ring-opened polymer or (4) the ring-opened copolymer.
   Of these, the specific addition polymer, specific ring-opened polymer, specific ring-opened copolymer and specific hydrogenated ring-opened (co)polymer are generally used as resins, and the specific addition copolymer is used as a resin or an elastomer according to the kind and proportion of the addition-copolymerizable compound used.

The specific addition polymer and specific addition copolymer (hereinafter referred to as "specific addition (co)polymer" generically) have the specific structural unit (1) and is obtained by subjecting a monomer comprising at least the specific cycloolefin compound, specifically a monomer composed of the specific cycloolefin compound alone or a monomer composed of the specific cycloolefin compound and the addition-copolymerizable compound to an addition-polymerizing treatment.
When the specific addition copolymer is used as a resin, another cycloolefin compound (hereinafter referred to as "another cycloolefin compound") than the specific cycloolefin compound and/or another addition-copolymerizable compound (hereinafter referred to as "another addition-copolymerizable compound") than the cycloolefin compound, such as ethylene, propylene, 1-butene, 1-pentene, 4-methyl-pentene-1, 1-hexene, 1-heptene, 1-octene, 1-decene, 1-dodecene, styrene or p-methylstyrene, may be used as an addition-copolymerizable compound for obtaining the specific addition copolymer.

As another cycloolefin compound, may be used a polar cycloolefin compound having a halogen atom or polar group. A non-polar cycloolefin compound having neither halogen atom nor polar group may also be used. Both compounds may also be used in combination.

Specific examples of polar cycloolefin compounds among other cycloolefin compounds include:
norbornene derivatives having substituted or unsubstituted silyl group such as 5-trimethoxysilyl-2-norbornene, 5-chlorodimethoxy- silyl-2-norbornene, 5-dichloromethoxysilyl-2-norbornene, 5-chloromethoxymethylsilyl-2-norbornene, 5-methoxymethylhydrosilyl-2-norbornene, 5-dimethoxyhydrosilyl-2-norbornene, 5-methoxydimethylsilyl-2-norbornene, 5-triethoxysilyl-2-norbornene, 5-chlorodiethoxysilyl-2-norbornene, 5-dichloro- ethoxysilyl-2-norbornene, 5-chloroethoxymethylsilyl-2- norbornene, 5-diethoxyhydrosilyl-2-norbornene, 5-ethoxy- dimethylsilyl-2-norbornene, 5-ethoxydiethylsilyl-2-norbornene, 5-tripropoxysilyl-2-norbornene, 5-triisopropoxysilyl-2-norbornene, 5-triphenoxysilyl-2-norbornene, 5-diphenoxymethylsilyl-2-norbornene, 5-trifluorosilyl-2-norbornene, 5-trichlorosilyl-2-norbornene, 5-tribromosilyl-2-norbornene, 5-(2',6',7'-trioxa-1'-silabicyclo[2.2.2]octyl)bicyclo[2.2.1]hept-2-ene, 5-(4'-methyl-2',6',7'-trioxa-1'-silabicyclo[2.2.2]octyl)-bicyclo[2.2.1]hept-2-ene, 5(1'-methyl-2',5'-dioxa-1'-silacyclopentyl)bicyclo[2.2.1]hept-2-ene, 5-trimethoxy-silylmethyl-2-norbornene, 5-(1-trimethoxysilyl)ethyl-2-norbornene, 5-(2-trimethoxysilyl)ethyl-2-norbornene, 5-(1-chlorodimethoxy- silyl)ethyl-2-norbornene, 5-(2-chlorodimethoxysilyl)ethyl- 2-norobornene, 5-triethoxysilylmethyl-2-norbornene, 5-(1-triethoxysilyl)ethyl-2-norbornene, 5-(2-triethoxysilyl)-ethyl-2-norbornene, 5-(1-chlorodiethoxysilyl)ethyl-2-norbornene, 5-(2-chlorodiethoxysilyl)ethyl-2-norbornene, 5-(2-trimethoxysilyl)propyl-2-norbornene, 5-(3-trimethoxysilyl)propyl-2-norbornene, 5-(2-triethoxysilyl)propyl-2-norbornene, 5-(3-triethoxysilyl)propyl-2-norbornene, trimethoxysilylpropyl 5-norbornene-2-carboxylate, triethoxysilylpropyl 5-norbornene-2-carboxylate, dimethoxymethylsilylpropyl 5-norbornene-2-carboxylate, trimethoxysilylpropyl 2-methyl-5-norbornene-2-carboxylate, dimethoxymethylsilylpropyl 2-methyl-5-norbornene-2-carboxylate and triethoxysilylpropyl 2-methyl-5-norbornene-2-carboxylate,

norbornene derivatives each having a substituted or unsubstituted alkylcarbonyl group, alkyloxycarbonyl group, alkylcarbonyloxy group or alkenylcarbonyloxy group, such as 2-acetyl-5-norbornene, methyl 5-norbornene-2-carboxylate, ethyl 5-norbornene-2-carboxylate, t-butyl 5-norbornene-2-carboxylate, methyl 2-methyl-5-norbornene-2-carboxylate, ethyl 2-methyl-5-norbornene-2-carboxylate, t-butyl 2-methyl-5-norbornene-2-carboxylate, trifluoromethyl 2-methyl-5-norbornene-2-carboxylate, 5-norbornen-2-yl acetate, 2-methyl-5-norborne-2-yl acetate, 2-methyl-5-norborne-2-yl acrylate, 2-methyl-5-norborn-2-yl methacrylate and dimethyl 5-norbornene-2,3-dicarboxylate,
norbornene derivatives having carboxylic anhydride residue such as 5- norbornene-2,3-dicarboxylic anhydride,
tetracyclododecene derivatives having a polar group, such as methyl 4-methyltetracyclo[6.2.1.1^{3,6}.0^{2,7}]dodec-9-ene-4-carboxylate, and
spiro ring compounds represented by the following formula (i) or formula (ii).
These compounds may be used either singly or in any combination thereof.

[Chemical 8]

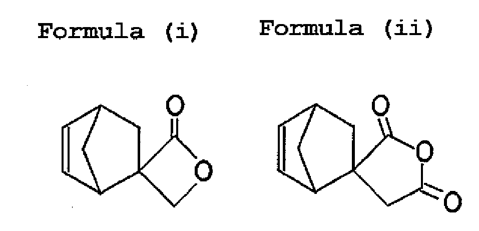

Specific examples of nonpolar olefin compounds among other cycloolefin compounds include:
unsubstituted or alkyl group-substituted cycloolefin compounds such as 2-norbornene, 5-methyl-2-norbornene, 5-ethyl-2-norbornene, 5-isopropyl-2-norbornene, 5-butyl-2-norbornene, 5-t-butyl-2-norbornene, 5-hexyl-2-norbornene, 5-decyl-2-norbornene, tricyclo[4.3.0.1^{2,5}]dec-3-ene, tetracyclo[4.4.0.1^{2,5}.1^{7,10}]dodec-3-ene, 8-methyltetracyclo-[4.4.0.1^{2,5}.1^{7,10}]dodec-3-ene, 8-ethyltetracyclo-[4.4.0.1^{2,5}.1^{7,10}]dodec-3-ene, tricyclo[4.4.0.1^{2,5}]undec-3-ene and tricyclo[4.3.0.1^{2,5}]dec-3,7-diene (dicyclopentadiene),
aryl group- or aralkyl group-substituted cycloolefin compounds such as 5-phenyl-2-norbornene, 5-methyl-5-phenyl-2-norbornene, 5-benzylnorbornene, 5-naphthyl-2-norbornene, 5-biphenyl-2-norbornene, 1,4-methano-1,4-dihydronaphthalene (benzonorbornene) and 1,4-methano-1,4,4a,9a-tetrahydrofluorene, and
alkylidene group-substituted cycloolefin compounds such as 5-ethylidene-2-norbornene.
These compounds may be used either singly or in any combination thereof.

The content of the specific structural unit (1) in the resinous specific addition copolymer is preferably at least 0.1 mol%, more preferably at least 1 mol%. If the content of the specific structural unit (1) is too low, the effect by having the silyl carboxylate residue may not be sufficiently brought about in some cases.

The addition-polymerizing treatment for obtaining the resinous specific addition (co)polymer is preferably conducted by feeding a monomer comprising the specific cycloolefin compound and a polymerization catalyst to a reactor under an atmosphere of an inert gas such as nitrogen or argon under conditions that the temperature of the reaction system is -20°C to 100°C in the presence of a proper solvent or diluent.
When a multicomponent catalyst is used as a polymerization catalyst, respective components in the polymerization catalyst may be independently fed to the reactor, or the respective components may be mixed in advance and then fed to the reactor. No particular limitation is also imposed on the feeding order of the respective components.

As the solvent or diluent for conducting the addition-polymerizing treatment, may be used a hydrocarbon, and specific examples thereof include alicyclic hydrocarbon solvents such as cyclohexane, cyclopentane and methylcyclopentane, aliphatic hydrocarbon solvents such as pentane, hexane, heptane and octane, and aromatic hydrocarbon solvents such as toluene, benzene and xylene. These compounds may be used either singly or in any combination thereof. A ratio of the solvent to the monomer is preferably 1 to 20 in terms of a weight ratio of the solvent/the monomer.

In the case where a monomer composed only of cycloolefin compounds (specific cycloolefin compound and another cycloolefin compound) are used as the monomer, as an addition polymerization catalyst for conducting the addition-polymerizing treatment, may be used a unicomponent complex catalyst or multicomponent catalyst comprising a metal such as palladium, nickel, cobalt, titanium or zirconium, which is shown in the following catalysts [1] to [3]. However, the catalyst is not limited thereto.

[1] Unicomponent complex catalyst comprising Pd, Ni or the like:
Examples of this kind of catalyst include:
   [Pd(CH₃CN)₄][BF₄]₂, [Pd(PhCN)₄][SbF₆],
   [(η³-crotyl)Pd(cyclo-oct-1,5-diene)][PF₆],
   [(η³-crotyl)Ni(cyclooct-1,5-diene)]- [B(3,5-(CF₃)₂C₆F₃)₄],
   [(η³-crotyl)Ni(cyclooct-1,5-diene)]- [PF₆],
   [(η³-allyl)Ni(cyclooct-1,5-diene)]B(C₆F₅)₄],
   [(η³-crotyl)Ni(cyclooct-1,5-diene)][SbF₆],
   toluene·Ni(C₆F₅)₂, benzene·Ni(C₆F₅)₂,
   mesitylene·Ni(C₆F₅)₂ and ethyl ether·Ni(C₆F₅)₂.

[2] Multicomponent catalyst composed of a combination of a palladium complex having a σ- or, σ- and π-bond and an organic aluminum or superstrong acid salt:
   Examples of this kind of catalyst include:
      a combination of di-µ-chloro-bis(6-methoxybicyclo[2.2.1]-hept-2-ene-endo-5σ,2π)Pd and a compound selected from methyl alumoxane (abbreviated as MAO), AgSbF₆ and AgBF₄, a combination of [(η³-allyl)PdCl]₂ and AgSbF₆ or AgBF₄, and a combination of [1,5-COD]Pd(CH₃)Cl], PPh₃ and NaB[3,5-(CF₃)₂C₆H₃]₄.
[3] Multicomponent catalyst comprising 1) a transition metal compound selected from a nickel compound, a palladium compound, a cobalt compound, titanium compound and a zirconium compound, 2) a compound selected from a superstrong acid, a Lewis acid and an ionic boron compound or 3) an organoaluminum compound.

In the case where a monomer composed of the cycloolefin compounds and another addition-copolymerizable compound are used as the monomer, as an addition polymerization catalyst for conducting the addition-polymerizing treatment, may be used an olefin copolymerization catalyst for obtaining an elastomeric specific addition (co)polymer which will be described subsequently.

The molecular weight modification of the specific addition (co)polymer obtained in the resinous addition-polymerizing treatment can be conducted by a method such as addition of a molecular weight modifier, control of the amount of a polymerization catalyst, control of a polymerization temperature or control of a conversion into a polymer. As the molecular weight modifier, may be used an α-olefin, hydrogen, a cyclic nonconjugated diene, an aromatic vinyl compound or the like.
The termination of a polymerization reaction in the addition-polymerizing treatment can be conducted by adding a compound selected from water, an alcohol, an organic acid, carbon dioxide gas and the like.
A reactor used for conducting the addition-polymerizing treatment may be of either a batch type or a continuous type. As the continuous type reactor, may be used a tube type reactor, a tower type reactor, a vessel type reactor or the like.

The resinous specific addition (co)polymer is obtained by adding a polymer solution after the addition-polymerizing treatment to a poor solvent such as an alcohol, for example, methanol, ethanol or isopropanol to precipitate a formed product and drying the formed product under reduced pressure. In this process, an unreacted monomer remaining in the polymer solution is also removed.
The polymer solution may also be subjected to a separating or removing treatment of a polymerization catalyst residue as needed. As a process for such a separating or removing treatment, may be suitably used any publicly known process. As a specific process, may be used a process, in which an inorganic acid such as hydrochloric acid, nitric acid or sulfuric acid, or an organic acid such as maleic acid or fumaric acid is added to the polymer solution, and the resultant mixture is then washed with water or an alcohol. An adsorption process making use of a proper adsorbent may also be used.

In the resinous specific addition (co)polymer obtained in such a manner, its weight average molecular weight in terms of polystyrene equivalent as measured by gel permeation chromatography using, for example, o-dichloro- benzene as a solvent is preferably 5,000 to 1,500,000, more preferably 10,000 to 1,000,000.
If the weight average molecular weight is lower than 5,000, the breaking strength of a film, thin film or sheet formed from such a specific addition (co)polymer may become insufficient in some cases, and its solvent resistance, liquid crystal resistance and the like may become low. If the weight average molecular weight exceeds 1,500,000 on the other hand, the forming and processing ability of such a specific addition (co)polymer into a sheet or film may become low in some cases, or the solution viscosity of a resin solution upon production of a film from the specific addition (co)polymer by a solvent casting process may become high, and so its handling may become inconvenient.

The resinous specific addition (co)polymer may be molded or formed into a molded or formed product by a method such as injection molding, blow molding, press molding or extrusion. The specific addition (co)polymer may also be formed into a thin film, film or sheet by dissolving it in a solvent selected from hydrocarbon solvents, halogenated hydrocarbon solvents, and polar solvents such as ketones, ethers, esters, amines, amides and urea and then going through a casting step and an evaporating step. The specific addition (co)polymer may also be formed and processed into a film or sheet by swelling it with any of these solvents and thereafter, evaporating the solvent by an extruder.

When the specific addition copolymer is used as an elastomer, such a specific addition copolymer is preferably a copolymer of ethylene, an α-olefin having 3 to 12 carbon atoms and the specific cycloolefin compound, and a conjugated polyene optionally used.
Specific examples of the α-olefin having 3 to 12 carbon atoms include propylene, 1-butene, 1-pentene, 4-methyl-1-pentene, 1-hexene, 1-heptene, 1-octene, 1-decene, 1-dodecene, styrene and p-methylstyrene. These compounds may be used either singly or in any combination thereof. When such an α-olefin having at most 12 carbon atoms is used, the copolymerizability of such an α-olefin with other compounds is liable to become satisfactory.
Specific examples of the nonconjugated polyene include linear acyclic dienes such as 1,4-hexadiene, 1,6-octadiene and 1,5-hexadiene, branched-chain acyclic dienes such as 5-methyl-1,4-hexadiene, 3,7-dimethyl-1,6-octadiene, 5,7-dimethyl-1,6-octadiene, 3,7-dimethyl-1,7-octadiene, 7-methyl-1,6-octadiene and dihydromyrcene, and alicyclic dienes such as tetrahydroindene, methyltetrahydroindene, dicyclopentadiene, bicyclo[2.2.1]hept-2,5-diene, 5-methylene-2-norbornene, 5-ethylidene-2-norbornene, 5-propenyl-2-norbornene, 5-isopropylidene-2-norbornene, 5-cyclohexylidene-2-norbornene and 5-vinyl-2-norbornene. These compounds may be used either singly or in any combination thereof.
Of the above-mentioned nonconjugated polyenes, are preferred 1,4-hexadiene, 5-methylene-2-norbornene and 5-ethylidene-2-norbornene.

In such an elastomeric specific addition copolymer, it may be preferable that the content of the specific structural unit (1) be 0.01 to 30 mol%, the content of the structural unit derived from ethylene be 40 to 90 mol%, the content of the structural unit derived from the α-olefin having 3 to 12 carbon atoms be 5 to 60 mol%, and the content of the structural unit derived from the nonconjugated polyene be 0 to 12 mol%.
If the content of the specific structural unit (1) is too low, the effect by having the silyl carboxylate residue may not be sufficiently brought about in some cases. If the content of the specific structural unit (1) is too high on the other hand, it may be difficult to conduct copolymerization with other compounds. In addition, it may be difficult to provide a copolymer having sufficient rubber elasticity as an elastomer. As a result that the amount of the polymerization catalyst used becomes great, it may be difficult to provide a copolymer having a high molecular weight.
If the content of the structural unit derived from ethylene is too low, it may be difficult in some cases to conduct copolymerization of the monomer. In addition, it may be difficult to provide an elastomer having excellent durability. If the content of the structural unit derived from ethylene is too high on the other hand, it may be difficult to provide a copolymer exhibiting behavior as an elastomer.
If the content of the structural unit derived from the α-olefin is too low, it may be difficult in some cases to provide an elastomer having sufficient elasticity. If the content of the structural unit derived from the α-olefin is too high on the other hand, it may be difficult to provide an elastomer having good durability.
If the content of the structural unit derived from the nonconjugated polyene is too high, it may be difficult in some cases to provide an elastomer having good durability.

The addition-polymerizing treatment for obtaining the elastomeric specific addition copolymer is preferably conducted by feeding ethylene, the α-olefin having 3 to 12 carbon atoms and the specific cycloolefin compound, and the conjugated diene optionally used to a reactor under an atmosphere of an inert gas such as nitrogen or argon under conditions that the temperature of the reaction system is 0°C to 150°C, particularly 10°C to 100°C in the presence of a proper solvent or diluent.

As a catalyst for conducting the addition-polymerization treatment, an olefin copolymerization catalyst capable of providing a copolymer, in which the respective structural units are arranged at comparatively random in a copolymerization reaction of the specific cycloolefin compound, ethylene and the α-olefin, and the nonconjugated polyene optionally used, is preferably used. As such an olefin copolymerization catalyst, is preferably used a catalyst composed of a transition metal compound, preferably a compound of a metal selected from metals of Groups 4 and 5 of the periodic table, and an organoaluminum compound. Specific examples of the catalyst system include the following systems:

(1) A catalyst system composed of a hydrocarbon compound-soluble vanadium compound and an organoaluminum compound, in which at least one chlorine atom is contained in any one or both of the vanadium compound and the organoaluminum compound.
In this catalyst system, as the vanadium compound, may be used a compound represented by the following general formula (8-1), VCl₄, VO(acac)₂, V(acac)₃ (in which "acac" means an acetylacetonato group), or a compound represented by the following general formula (8-2).

General formula (8-1): O=VClₖ(OR¹¹)₃₋ₖ
wherein R¹¹ means a hydrocarbon group such as an ethyl, propyl, butyl or hexyl group, and k denotes an integer of 0 to 3.
General formula (8-2): VCl₃·mZ
wherein Z means a Lewis base capable of forming a complex soluble in hydrocarbon compounds, such as tetrahydrofuran, 2-methyltetrahydrofuran, 2-methoxymethyltetrahydrofuran or dimethylpyridine, and m denotes an integer of 2 or 3.

As the organoaluminum compound, may be used a trialkylaluminum compound represented by the following general formula (8-3), an alkylaluminum hydride represented by the following general formula (8-4) or (8-5), an alkylaluminum chloride represented by the following general formula (8-6), (8-7) or (8-8), an alkoxy- or phenoxy-substituted organoaluminum compound represented by the following general formula (8-9) or (8-10), or methylalumoxane (MAO), ethylalumoxane or butylalumoxane obtained by a reaction of water with the above-described trialkylaluminum compound.

General formula (8-3): AlR¹²₃
General formula (8-4): HAlR¹²₂
General formula (8-5): H₂AlR¹²
General formula (8-6): R¹²AlCl₂
General formula (8-7): R¹²₃Al₂Cl₃
General formula (8-8): R¹²₂AlCl
General formula (8-9): R¹²₂Al(OR¹³)
General formula (8-10): R¹²Al(OR¹³)₂.
(In the general formulae (8-3) to (8-10), R¹² means a hydrocarbon group such as a methyl, ethyl, propyl, butyl or hexyl group, and R¹³ denotes a methyl, ethyl, propyl, butyl, octyl, phenyl, tolylxylyl, 2,6-di-t-butylphenyl, 4-methyl-2,6-di-t-butylphenyl, 2,6-dimethylphenyl or 4-methyl-2,6-dimethylphenyl group.)

In this catalyst system, an oxygen- or nitrogen-containing electron donor such as an ester of an organic acid or inorganic acid, ether, amine, ketone or alkoxysilane may be additionally added to the vanadium compound and organoaluminum compound.

(2) A catalyst system composed of a titanium halide or zirconium halide carried on a carrier composed of silica or magnesium chloride, and an organoaluminum compound.
In this catalyst system, as the titanium halide or zirconium halide, may be used titanium tetrachloride, titanium tetrabromide, zirconium tetrachloride or the like.
As the organoaluminum compound, may be used trimethylaluminum, triethylaluminum, triisobutylaluminum, methylalumoxane or the like.
In this catalyst system, dioctyl phthalate, tetraalkoxysilane, diphenyldimethoxysilane or the like may be additionally added to the above-described compounds.

(3) A catalyst system composed of a transition metal compound comprising a metal selected from titanium, zirconium and hafnium, which has one or two cyclopentadienyl or indenyl groups as a ligand each having a substituent selected from hydrogen, an alkyl group and an allyl group, and an organoaluminum compound containing at least 50 mol% of methylalumoxane.
As specific examples of the transition metal compound, may be mentioned bis(cyclopentadienyl)dimethylzirconium, bis(cyclopentadienyl)diethylzirconium, bis(cyclopentadienyl)methylzirconium monochloride, ethylenebis-(cyclopentadienyl)zirconium dichloride, ethylenebis-(cyclopentadienyl)methylzirconium monochloride, methylenebis(cyclopentadienyl)zirconium dichloride, ethylenebis(indenyl)zirconium dichloride, ethylenebis-(indenyl)dimethylzirconium, ethylenebis(indenyl)-diphenylzirconium, ethylenebis(4,5,6,7-tetrahydro-1-indenyl)dimethylzirconium, ethylenebis(4-methyl-1-indenyl)zirconium dichloride, ethylenebis(2,3-dimethyl-1-indenyl)zirconium dichloride, dimethylsilylbis-(cyclopentadienyl)zirconium dichloride, dimethylsilyl-bis(indenyl)zirconium dichloride, dimethylsilylbis-(dimethylcyclopentadienyl)zirconium dichloride, dimethylmethyl(fluorenyl)(cyclopentadienyl)zirconium dichloride, diphenylmethyl(fluorenyl)(cyclopentadienyl)-zirconium dichloride, diphenylsilylbis(indenyl)zirconium dichloride, dimethylsilylbis(2-methyl-4-phenylindenyl)-zirconium dichloride, bis(cyclopentadienyl)dimethyl-titanium, bis(cyclopentadienyl)methyltitanium monochloride, ethylenebis(indenyl)titanium dichloride, ethylenebis(4,5,6,7-tetrahydro-1-indenyl)titanium dichloride, methylenebis(cyclopentadienyl)titanium dichloride and η¹:η⁵-{[(tert-butyl-amido)dimethylsilyl]-(2,3,4,5-tetramethyl-1-cyclopentadienyl)}titanium dichloride.
(4) A catalyst system composed of a complex of a transition metal of Group 4 of the periodic table, which has a bisalkyl-substituted or N-alkyl-substituted salicylaldoimine as a ligand, and methylalumoxane (MAO).

As the solvent or diluent for conducting the addition-polymerizing treatment, may be used, for example, an aliphatic hydrocarbon, an alicyclic hydrocarbon, an aromatic hydrocarbon or a halide thereof. Specific examples thereof include butane, pentane, hexane, heptane, 2-butene, 2-methyl-2-butene , cyclopentane, methylcyclopentane, cyclohexane, isooctane, benzene, toluene, xylene, chlorobenzene, dichloromethane and dichloroethane. These solvents or diluents may preferably be used in a state that a water content has been lowered to 20 ppm or lower by a distilling treatment or adsorbing treatment.

The molecular weight modification of the specific addition copolymer obtained in such an addition-polymerizing treatment can be conducted by a method such as addition of a molecular weight modifier, control of the amount of a polymerization catalyst, control of a polymerization temperature or control of a conversion into a polymer. As the molecular weight modifier, may be used hydrogen, diethylzinc, diisobutylaluminum hydride or the like.
A reactor used for conducting the addition-polymerizing treatment may be any of the batch type and the continuous type. As the continuous type reactor, may be used a tube type reactor, tower type reactor, vessel type reactor or the like.

The elastomeric specific addition copolymer is obtained by blowing steam into a polymer solution, thereby conducting a removal treatment of the solvent, separating solids from the resulting slurry and then conducting dehydrating and drying by means of a screw type squeezer, extruder, heated roll or the like. Alternatively, the polymer solution is heated to concentrate it, and the concentrate is then dried by means of a vented extruder, thereby obtaining the specific addition copolymer.
Further, the polymer solution may be subjected to a separating or removing treatment of a polymerization catalyst residue as needed. As a specific method for such a separating or removing treatment, may be used a method in which the polymer solution is passed through an adsorption column packed with silica, alumina, diatomaceous earth or the like, or a method in which a great amount of water, alcohol or the like is added to the polymer solution to wash it.

In the elastomeric specific addition copolymer obtained in such a manner, its weight average molecular weight in terms of polystyrene equivalent as measured by gel permeation chromatography using, for example, o-dichloro- benzene as a solvent is preferably 1,000 to 3,000,000, more preferably 3,000 to 1,000,000, particularly preferably 5,000 to 700,000.
The glass transition temperature of the elastomeric specific addition copolymer is preferably -90 to 50°C, particularly preferably -70 to 10°C, thereby providing an elastomer having sufficient elasticity.
In the present invention, the glass transition temperature can be measured by means of a differential scanning calorimeter (DSC).

The specific ring-opened polymer and specific ring-opened copolymer (hereinafter referred to as "specific ring-opened (co)polymer" generically) have, among the specific structural units (2), a structural unit that X in the general formula (2) is a vinylene group, and is obtained by subjecting a monomer comprising at least the specific cycloolefin compound, specifically a monomer composed of the specific cycloolefin compound alone or a monomer composed of the specific cycloolefin compound and the ring-opening-copolymerizable compound to a ring-opening-polymerizing treatment.

Another cycloolefin compound may be used as the ring-opening-copolymerizable compound.
As specific examples of such another cycloolefin compound, may be mentioned
bicyclo[2.2.1]hept-2-ene,
tricyclo[5.2.1.0^{2,6}]dec-8-ene,
tetracyclo[4.4,0,1^{2,5}.1^{7,10}]dodec-3-ene,
pentacyclo[9.2.1.1^{4,7}.0^{2,10}.0^{3,8}]pentadec-5-ene,
heptacyclo[13.2.1.1^{3,13}.1^{6,9}.0^{2,14}.0^{4,12}.0^{5,10}]icos-7-ene,
5-methylbicyclo[2.2.1]hept-2-ene,
5-ethylbicyclo[2.2.1]hept-2-ene,
5-n-hexylbicyclo[2.2.1]hept-2-ene,
5-isopropylbicyclo[2.2.1]hept-2-ene,
5-n-octylbicyclo[2.2.1]hept-2-ene,
5-n-decylbicyclo[2.2.1]hept-2-ene,
5-cyclohexylbicyclo[2.2.1]hept-2-ene,
5-(3-cyclohexenyl)bicyclo[2.2.1]hept-2-ene,
5-ethylidenebicyclo[2.2.1]hept-2-ene,
8-ethylidenetetracyclo[4.4.0.1^{2,5}.1^{7,10}]dodec-3-ene,
8-ethyltetracyclo[4.4.0.1^{2,5}.1^{7,10}]dodec-3-ene,

5-cyanobicyclo[2.2.1]hept-2-ene,
5-cyano-5-methylbicyclo[2.2.1]hept-2-ene,
5-methoxycarbonylbicyclo[2.2.1]hept-2-ene,
5-methyl-5-methoxycarbonylbicyclo[2.2.1]hept-2-ene,
5-ethoxycarbonylbicyclo[2.2.1]hept-2-ene,
methyl tetracyclo[6.2.1.1^{3,6}.0^{2,7}]dodec-9-ene-4-carboxylate,
ethyl tetracyclo[6.2.1.1^{3,6}.0^{2,7}]dodec-9-ene-4-carboxylate,
isopropyl tetracyclo[6.2.1.1^{3,6}.0^{2,7}]dodec-9-ene-4-carboxylate,
n-propyl tetracyclo[6.2.1.1^{3,6}.0^{2,7}]dodec-9-ene-4-carboxylate,
n-butyl tetracyclo[6.2.1.1^{3,6}.0^{2,7}]dodec-9-ene-4-carboxylate,
methyl 4-methyltetracyclo[6.2.1.1^{3,6}.0^{2,7}]dodec-9-ene-4-carboxylate,
ethyl 4-methyltetracyclo[6.2.1.1^{3,6}.0^{2,7}]dodec-9-ene-4-carboxylate,
n-propyl 4-methyltetracyclo[6.2.1.1^{3,6}.0^{2,7}]dodec-9-ene-4-carboxylate,
isopropyl 4-methyltetracyclo[6.2.1.1^{3,6}.0^{2,7}]dodec-9-ene-4-carboxylate,
n-butyl 4-methyltetracyclo[6.2.1.1^{3,6}.0^{2,7}]dodec-9-ene-4-carboxylate,
phenyl 4-methyltetracyclo[6.2.1.1^{3,6}.0^{2,7}]dodec-9-ene-4-carboxylate,
8-(1-naphthoxy)carbonyltetracyclo[4.4.0.1^{2,5}.1^{7,10}]-dodec-3-ene,
8-(2-naphthoxy)carbonyltetracyclo[4.4.0.1^{2,5}.1^{7,10}]-dodec-3-ene,
8-(4-phenylphenoxy)carbonyltetracyclo[4.4.0.1^{2,5}. 1^{7,10}]dodec-3-ene,
8-methyl-8-phenoxycarbonyltetracyclo[4.4.0.1^{2,5}.1^{7,10}]-dodec-3-ene,
8-methyl-8-(1-naphthoxy)carbonyltetracyclo[4.4.0.1^{2,5}. 1^{7,10}]dodec-3-ene,
8-methyl-8-(2-naphthoxy)carbonyltetracyclo[4.4.0.1^{2,5}. 1^{7,10}]dodec-3-ene,
8-methyl-8-(4-phenylphenoxy)carbonyltetracyclo-[4.4.0.1^{2,5}.1^{7,10}]dodec-3-ene,

5-phenylbicyclo[2.2.1]hept-2-ene,
5-(1-naphthyl)bicyclo[2.2.1]hept-2-ene,
5-(2-naphthyl)bicyclo[2.2.1]hept-2-ene,
5-(4-biphenyl)bicyclo[2.2.1]hept-2-ene,
5-(2-naphthyl)-5-methylbicyclo[2.2.1]hept-2-ene,
5-(4-biphenyl)-5-methylbicyclo[2.2.1.]hept-2-ene,
8-phenyltetracyclo[4.4.0.1^{2,5}.1^{7,10}]-3-dodecene,
5-hydroxybicyclo[2.2.1]hept-2-ene,
5-methoxybicyclo[2.2.1]hept-2-ene,
5-hydroxymethylbicyclo[2.2.1]hept-2-ene,
5-aminomethylbicyclo[2.2.1]hept-2-ene,
5-chloromethylbicyclo[2.2.1]hept-2-ene,
5-trimethoxysilylbicyclo[2.2.1]hept-2-ene,
5-triethoxysilylbicyclo[2.2.1]hept-2-ene,
5-tri-n-propoxysilylbicyclo[2.2.1]hept-2-ene,
5-tri-n-butoxysilylbicyclo[2.2.1]hept-2-ene,
5-fluorobicyclo[2.2.1]hept-2-ene,
5-fluoromethylbicyclo[2.2.1]hept-2-ene,
5-trifluoromethylbicyclo[2.2.1]hept-2-ene,
5-pentafluoroethylbicyclo[2.2.1]hept-2-ene,

5,5-difluorobicyclo[2.2.1]hept-2-ene,
5,6-difluorobicyclo[2.2.1]hept-2-ene,
5,5-bis(trifluoromethyl)bicyclo[2.2.1]hept-2-ene,
5,6-bis(trifluoromethyl)bicyclo[2.2.1]hept-2-ene,
5-methyl-5-trifluoromethylbicyclo[2.2.1]hept-2-ene,
5,5,6-trifluorobicyclo[2.2.1]hept-2-ene,
5,5,6-tris(fluoromethyl)bicyclo[2.2.1]hept-2-ene,
5,5,6,6-tetrafluorobxcyclo[2.2.1]hept-2-ene,
5,5,6,6-tetrakis(trifluoromethyl)bicyclo[2.2.1]hept-2-ene,
5,5-difluoro-6,6-bis(trifluoromethyl)bicyclo[2.2.1]-hept-2-ene,
5-fluoro-5-pentafluoroethylbicyclo[2.2.1]-hept-2-ene,
5-chloro-5,6,6-trifluorobicyclo[2.2.1]hept-2-ene,
5,5,6-trifluoro-6-trifluoromethoxybicyclo[2.2.1]-hept-2-ene,
8-fluorotetracyclo[4.4.0.1^{2,5}.1^{7,10}]-3-dodecene,
8-fluoromethyltetracyclo[4.4.0.1^{2,5}.1^{7,10}]dodec-3-ene,
8-trifluoromethyltetracyclo[4.4.0.1^{2,5}.1^{7,10}]dodec-3-ene,
8-pentafluoroethyltetracyclo[4.4.0.1^{2,5}.1^{7,10}]dodec-3-ene,
8,8-difluorotetracyclo[4.4.0.1^{2,5}.1^{7,10}]dodec-3-ene,
8,9-difluorotetracyclo[4.4.0.1^{2,5}.1^{7,10}]dodec-3-ene,
8,8-bis(trifluoromethyl)tetracyclo[4.4.0.1^{2,5}.1^{7,10}]-dodec-3-ene,
(trifluoromethyl)tetracyclo[4.4.0.1^{2,5}.1^{7,10}]-dodec-3-ene,

8-methyl-8-trifluoromethyltetracyclo[4.4.0,1^{2,5}.1^{7,10}]-dodec-3-ene,
8,8,9-trifluorotetracyclo[4.4.0.1^{2,5}.1^{7,10}]dodec-3-ene,
8,8,9-tris(trifluoromethyl)tetracyclo[4.4.0.1^{2,5}. 1^{7,10}]dodec-3-ene,
8,8,9,9-tetrafluorotetracyclo[4.4.0.1^{2,5}.1^{7,10}]dodec-3-ene,
8,8,9,9-tetrakis(trifluoromethyl)tetracyclo[4.4.0.1^{2,5}. 1^{7,10}]dodec-3-ene,
8,8-difluoro-9,9-bis(trifluoromethyl)tetracyclo-[4.4.0.1^{2,5}.1^{7,10}]dodec-3-ene,
8,9-difluoro-8,9-bis(trifluoromethyl)tetracyclo-[4.4.0.1^{2,5}.1^{7,10}]dodec-3-ene, and
8,8,9-trifluoro-9-trifluoromethoxytetracyclo-[4.4.0.1^{2,5}.1^{7,10}]dodec-3-ene.
These compounds may be used either singly or in any combination thereof.

The content of the specific structural unit (2) in the specific ring-opened copolymer is preferably at least 0.01 mol%, more preferably at least 0.1 mol%. If the content of the specific structural unit (2) is too low, the effect by having the silyl carboxylate residue may not be sufficiently brought about in some cases.

The ring-opening-polymerizing treatment for obtaining the specific ring-opened (co)polymer is preferably conducted by feeding a monomer comprising the specific cycloolefin compound and a polymerization catalyst to a reactor under an atmosphere of an inert gas such as nitrogen or argon under conditions that the temperature of the reaction system is -20°C to 100°C in the presence of a proper solvent or diluent.
When a multicomponent catalyst is used as a polymerization catalyst, respective components in the polymerization catalyst may be independently fed to the reactor, or the respective components may be mixed in advance and then fed to the reactor. No particular limitation is also imposed on the feeding order of the respective components.

As ring-opening polymerization catalysts used for conducting the ring-opening-polymerizing treatment, may be used catalysts described in Olefin Metathesis and Metathesis Polymerization (K. J. IVIN, J. C. MOL, Academic Press, 1997), and may be mentioned, for example, the following metathesis polymerization catalysts.
More specifically, they are catalysts composed of a combination of a component (a) at least one compound selected from compounds of W, Mo, Re, V and Ti and a component (b) at least one compound selected from compounds of Li, Na, K, Mg, Ca, Zn, Cd, Hg, B, Al, Si, Sn, Pb and the like, which have at least one the element-carbon bond or the element-hydrogen bond. In order to enhance activity of the catalyst in this case, a component (c): additive, which will be described subsequently, may also be added.
As typical examples of the compounds of W, Mo, Re, V and Ti, which are suitable for use as the component (a), may be mentioned the compounds described in Japanese Patent Application Laid-Open No. 240517/1989, such as WCl₆, MoCl₅, ReOCl₃, VOCl₃ and TiCl₄.
As specific examples of the compounds used as the component (b), may be mentioned the compounds described in Japanese Patent Application Laid-Open No. 240517/1989, such as n-C₄H₉Li, (C₂H₅)₃Al, (C₂H₅)₂AlCl, (C₂H₅)_{1.5}AlCl_{1.5}, (C₂H₅)AlCl₂, methyl alumoxane and LiH.
As the additive, which is the component (c), may be suitably used alcohols, aldehydes, ketones and amines. Further, the compounds described in Japanese Patent Application Laid-Open No. 240517/1989 may also be used.

The amount of the metathesis catalyst used is within a range that a proportion of the component (a) to the monomer subjected to the ring-opening-polymerizing treatment amounts to generally 1:500 to 1:500,000 in terms of a molar ratio, preferably 1:1,000 to 1:100,000.
A proportion of the component (a) to the component (b) is within a range of 1:1 to 1:100 in terms of a metal atom ratio of "the component (a) to the component (b)", preferably 1:2 to 1:50. A proportion of the component (a) to the component (c) is within a range of 0.005:1 to 15:1 in terms of a molar ratio of "the component (c) to the component (a)", preferably 0.05:1 to 10:1.

Examples of other catalysts include metathesis catalysts composed of a carbene complex, metallacyclobutene complex or the like of a metal of Group 4 to Group 8 of the periodic table using no promoter.
Typical examples of such catalysts include
W[=N-2,6-C₆H₃-(i-C₃H₇)₂][=CH-t-C₄H₉][O-t-C₄H₉]₂,
Mo(=N-2,6-C₆H₃-(i-C₃H₇)₂)[=CH-t-C₄H₉][O-t-C₄H₉]₂,
Ru(=CHCH=CPh₂)(PPh₃)₂Cl₂ and
Ru (=CHPh) (PC₆H₁₁)₂Cl₂.
The amount of this catalyst used is within a range that a proportion of the catalyst to the monomer subjected to the ring-opening-polymerizing treatment amounts to generally 1:30 to 1:50,000 in terms of a molar ratio, preferably 1:50 to 1:10,000.

As the a solvent or diluent used for conducting the ring-opening-polymerizing treatment, may be used an aliphatic hydrocarbon, alicyclic hydrocarbon, aromatic hydrocarbon, halogenated hydrocarbon, saturated carboxylic acid ester, ether or the like.
Specific examples of the aliphatic hydrocarbon include pentane, hexane, heptane, octane, nonane and decane. Specific examples of the alicyclic hydrocarbon include cyclohexane, cyclopentane, cyclooctane, decalin and norbornane. Specific examples of the aromatic hydrocarbon include such as benzene, toluene, xylene, ethylbenzene and cumene. Specific examples of the halogenated hydrocarbon include chlorobutane, bromohexane, methylene chloride, dichloroethane, hexamethylene dibromdie, chlorobenzene, chloroform and tetrachloroethylene. Specific examples of the saturated carboxylic acid ester include ethyl acetate, n-butyl acetate, isobutyl acetate, methyl propionate and dimethoxyethane. Specific examples of the ether include dibutyl ether, tetrahydrofuran and dimethoxyethane. These compounds may be used either singly or in any combination thereof. Among these, the aromatic hydrocarbons are preferred.
The amount of the solvent used is such that a weight ratio of "solvent to monomer" amounts to generally 1:1 to 30:1, preferably 1:1 to 20:1.

The molecular weight modification of the specific addition (co)polymer obtained in the ring-opening-polymerizing treatment can be conducted by a method such as addition of a molecular weight modifier, control of the amount of a polymerization catalyst, control of a polymerization temperature or control of a conversion into a polymer. As examples of the molecular weight modifier, may be mentioned α-olefins such as ethylene, propylene, 1-butene, 1-pentene, 1-hexene and 1-octene.
The ring-opening polymerization reaction can be terminated by adding an alcohol, an organic acid, water, an alkali metal salt or the like to the reaction system.
A reactor used for conducting the ring-opening-polymerizing treatment may be of either a batch type or a continuous type. As the continuous type reactor, may be used a tube type reactor, a tower type reactor, a vessel type reactor or the like.
After completion of the ring-opening-polymerizing treatment, the resultant ring-opened polymer solution may be subjected to a treatment for removing the catalyst in the solution using water or an alcohol. However, the treatment for removing the solvent may not be conducted when, for example, a high-active metathesis polymerization catalyst is selected.

The specific hydrogenated ring-opened (co)polymer is a (co)polymer having the specific structural unit (2), in which X in the general formula (2) in the whole or a part of the specific structural unit (2) is an ethylene group, and is obtained by hydrogenating the above-described specific ring-opened (co)polymer.
As catalysts used for conducting the hydrogenation, may be used a heterogeneous catalyst and a homogenous catalyst that are used in an ordinary hydrogenation reaction of an olefinic compound.
As specific examples of the heterogeneous catalyst, may be mentioned solid catalysts with a noble metal catalytic substance such as palladium, platinum, nickel, rhodium or ruthenium carried on a carrier such as carbon, silica, alumina or titania. As specific examples of the homogenous catalyst, may be mentioned nickel naphthenate/triethylaluminum, nickel acetylacetonate/triethylaluminum, cobalt octanoate/n-butyllithium, titanocene dichloride/diethylaluminum monochloride, rhodium acetate, chlorotris(triphenylphosphine)rhodium, dichlorotris-(triphenylphosphine)ruthenium, chlorohydrocarbonyltris-(triphenylphosphine)ruthenium and dichlorocarbonyltris-(triphenylphosphine)ruthenium. The form of these catalysts may be either powder or particles.
In order to substantially prevent aromatic rings located at side chains in the specific ring-opened (co)polymer from being hydrogenated, it is necessary to control the amount of these hydrogenation catalysts added. However, the hydrogenation catalyst is generally used in a proportion that a weight ratio of "the specific ring-opened (co)polymer to the hydrogenation catalyst" amounts to 1:(1 x 10⁻⁶) to 1:2.

It is necessary to conduct the hydrogenation reaction under conditions that aromatic rings located at side chains in the specific ring-opened (co)polymer are substantially not hydrogenated. In general, the hydrogenation reaction is conducted by adding a hydrogenation catalyst to a solution of the specific ring-opened (co)polymer and causing hydrogen gas of normal pressure to 300 atm, preferably 3 to 200 atm to act on the solution at a temperature of 0 to 200°C, preferably 20 to 180°C.
The hydrogenation rate of unsaturated bonds in all unsaturated bond-containing structural units is preferably at least 90 mol%, more preferably at least 95 mol%, still more preferably at least 98 mol%. Discoloration or deterioration by heat of the resulting specific hydrogenated ring-opened (co)polymer is more inhibited as the hydrogenation rate is higher. It is hence preferable that the hydrogenation rate be higher.

In the specific ring-opened (co)polymer and specific hydrogenated ring-opened (co)polymer, their weight average molecular weights in terms of polystyrene equivalent as measured by gel permeation chromatography using, for example, tetrahydrofuran as a solvent is preferably 5,000 to 1,500,000, more preferably 10,000 to 1,000,000.
If the weight average molecular weight is lower than 5,000, the breaking strength of a film, thin film or sheet formed from such a specific ring-opened (co)polymer or hydrogenated ring-opened (co)polymer may become insufficient in some cases, and its solvent resistance, liquid crystal resistance and the like may become low. If the weight average molecular weight exceeds 1,500,000 on the other hand, the forming and processing ability of such a specific ring-opened (co)polymer or hydrogenated ring-opened (co)polymer into a sheet or film may become low in some cases, or the solution viscosity of a resin solution upon production of a film from the specific ring-opened (co)polymer or hydrogenated ring-opened (co)polymer by a solvent casting process may become high, and so its handling may become inconvenient.

The specific ring-opened (co)polymer and hydrogenated ring-opened (co)polymer may be molded or formed into molded or formed products by a method such as injection molding, blow molding, press molding or extrusion. The specific ring-opened (co)polymer or hydrogenated ring-opened (co)polymer may also be formed into a thin film, film or sheet by dissolving it in a solvent selected from hydrocarbon solvents, halogenated hydrocarbon solvents, and polar solvents such as ketones, ethers, amines, amides and urea and then going through a casting step and an evaporating step. The specific ring-opened (co)polymer or hydrogenated ring-opened (co)polymer may also be formed and processed into a film or sheet by swelling it with any of these solvents and thereafter, evaporating the solvent by an extruder.

Various kinds of additives such as an antioxidant and an ultraviolet absorbent may be contained in the (co)polymers according to the present invention.
As the antioxidant, may be used a phenolic or hydroquinone antioxidant such as 2,6-di-t-butyl-4-methylphenol, 4,4'-thiobis(6-t-butyl-3-methylphenol), 1,1'-bis(4-hydroxyphenyl)cyclohexane, 2,2'-methylenebis(4-ethyl-6-t-butylphenol), 2,5-di-t-butylhydroquinone, pentaerythrityltetrakis[3-(3,5-di-t-butyl-4-hydroxyphenyl) propionate], triethylene glycol-bis[3-(3-t-butyl-5-methyl-4-hydroxyphenyl)propionate], 1,6-hexanediol-bis[3-(3,5-dit- butyl-4-hydroxyphenyl) propionate], 2,4-bis(n-octylthio)-6-(4-hydroxy-3,5-di-t-butylanilino)-1,3,5-triazine, pentaerythrityltetrakis[3-(3,5-di-t-butyl-4-hydroxyphenyl)propionate], 2,2-thio-diethylenebis[3-(3,5-di-t-butyl-4-hydroxyphenyl) propionate], octadecyl-3-(3,5-di-t-butyl-4-hydroxyphenyl) propionate, N,N'-hexamethylenebis(3,5-di-t-butyl-4-hydroxyhydrocinnamamide, 3,5-t-butyl-4-hydroxy-4- benzylphosphonate-diethyl ester or 1,3,5-trimethyl-2,4,6- tris(3,5-di-t-butyl-4-hydroxybenzyl)benzene, or a phosphorus antioxidant such as tris(4-methoxy-3,5- diphenyl)phosphite, tris(nonylphenyl)phosphite or tris(2,4- di-t-butylphenyl)phosphite. The oxidation stability of the resulting (co)polymer can be improved by adding these antioxidants singly or in combination.
As the ultraviolet absorbent, may be used 2,4-dihydroxybenzophenone, 2-hydroxy-4-methoxybenzophenone, 2,2-methylenebis[4-(1,1,3,3-tetramethylbutyl)-6-[(2H-benzotriazol-2-yl)phenol]], a hindered amine type ultraviolet absorbent or a benzoate type ultraviolet absorbent. The light resistance of the resulting (co)polymer can be improved by adding these ultraviolet absorbent singly or in combination.
As a further additive, may be used a lubricant. The processability of the resulting (co)polymer can be improved by adding the lubricant.

The resinous specific addition (co)polymer, specific ring-opened (co)polymer and specific hydrogenated ring-opened (co)polymer may be combined with any other thermoplastic resin, for example, a thermoplastic resin selected from other cycloolefin addition (co)polymers and cycloolefin ring-opened (co)polymers than the (co)polymers according to the present invention, and hydrogenated products thereof, addition copolymers of another cycloolefin compound and ethylene and/or an α-olefin, polymethyl methacrylate, polyarylate, poly(ether sulfone), poly(allylene sulfide), polyethylene, polypropylene, polyester, polyamide, and petroleum resins to use them as thermoplastic polymer compositions.

The elastomeric specific addition copolymer may be combined with a vulcanizing agent and/or a crosslinking agent and an olefin copolymer optionally used and having no functional group to use it as an elastomer composition.

No particular limitation is imposed on the vulcanizing agent, and specific examples thereof include sulfur such as sulfur powder, precipitated sulfur, colloidal sulfur and insoluble sulfur; inorganic vulcanizing agents such as sulfur chloride, selenium and tellurium; and sulfur-containing organic compounds such as morpholine disulfide, alkylphenol disulfides, thiuram disulfides and dithiocarbamates. These vulcanizing agents may be used either singly or in any combination thereof.
The proportion of the vulcanizing agent used is generally 0.1 to 10 parts by weight, preferably 0.5 to 5 parts by weight of the specific addition copolymer.

In the elastomer composition, a vulcanization accelerator may be used in combination with the vulcanizing agent.
As specific examples of such a vulcanization accelerator, may be mentioned aldehyde ammonias such as hexamethylenetetramine; guanidines such as diphenylguanidine, di-(o-tolyl)guanidine and o-tolylpiguanide; thioureas such as thiocarboanilide, di-(o-tolyl)thiourea, N,N'-diethylthiourea, tetramethylthiourea, trimethylthiourea and dilaurylthiourea; thiazoles such as mercaptobenzothiazole, dibenzothiazole disulfide, 2-(4-morpholinothio)benzothiazole, 2-(2,4-dinitrophenyl)-mercaptobenzothiazole and (N,N'-diethylthiocarbamoylthio)-benzothiazole; sulfenamides such as N-t-butyl-2-benzothiazyl sulfenamide, N,N'- dicyclohexyl-2-benzothiazyl sulfenamide, N,N'-diisopropyl- 2-benzothiazyl sulfenamide and N-cyclohexyl-2-benzothiazyl sulfenamide; thiurams such as tetramethylthiuram disulfide, tetraethylthiuram disulfide, tetra-n-butylthiuram disulfide, tetramethylthiuram monosulfide and dipentamethylenethiuram tetrasulfide; carbamic acid salts such as zinc dimethylthiocarbamate, zinc diethylthiocarbamate, zinc din-butylthiocarbamate, zinc ethylphenylthiocarbamate, sodium dimethyldithio- carbamate, copper dimethyldithiocarbamate, tellurium dimethylthiocarbamate and iron dimethylthiocarbamate; and xanthogenic acid salts such as zinc butylthioxanthogenate. These vulcanization accelerators may be used either singly or in any combination thereof.
The proportion of the vulcanization accelerator used is generally 0.1 to 20 parts by weight, preferably 0.2 to 10 parts by weight per 100 parts by weight of the specific addition copolymer.

To the elastomer composition, may be added a vulcanization acceleration aid, as needed, in addition to the vulcanizing agent and vulcanization accelerator.
As specific examples of such a vulcanization acceleration aid, may be mentioned metal oxides such as magnesium oxide, zinc white, litharge, red lead and lead white; and organic acids or organic acid salts such as stearic acid, oleic acid and zinc stearate. Among these, zinc white and stearic acid are particularly preferred. These vulcanization acceleration aids may be used either singly or in any combination thereof.
The proportion of the vulcanization acceleration aid used is generally 0.5 to 20 parts by weight per 100 parts by weight of the specific addition copolymer.

No particular limitation is imposed on the crosslinking agent. As specific examples thereof, may be mentioned organic peroxides such as 1,1-di-t-butylperoxy-3,3,5-trimethylcyclohexane, di-t-butyl peroxide, dicumyl peroxide, t-butylcumyl peroxide, 2,5-dimethyl-2,5-di(t-butylperoxy)hexane and 1,3-bis(t-butylperoxyisopropyl)-benzene. These crosslinking agents may be used either singly or in any combination thereof.
The proportion of the crosslinking agent used is generally 0.1 to 15 parts by weight, preferably 0.5 to 10 parts by weight per 100 parts by weight of the specific addition copolymer.

In the elastomer composition, a crosslinking aid may also be used in combination with the crosslinking agent.
As specific examples of such a crosslinking aid, may be mentioned sulfur and sulfur compounds such as sulfur and dipentamethylenethiuram tetrasulfide; polyfunctional monomers such as ethylene diacrylate, ethylene dimethacrylate, polyethylene diacrylate, polyethylene dimethacrylate, divinylbenzene, diallyl phthalate, triallyl cyanurate, m-phenylene bismaleimide and toluylene bismaleimide; and oxime compounds such as p-quinone oxime and p,p'-dibenzoylquinone oxime. These crosslinking aids may be used either singly or in any combination thereof.
The proportion of the crosslinking aid used is generally 0.5 to 20 parts by weight per 100 parts by weight of the specific addition copolymer.

No particular limitation is imposed on the olefin copolymer having no functional group so far as it is commonly used in elastomer compositions. It is however preferable to use a copolymer comprising a structural unit derived from ethylene and a structural unit derived from an α-olefin having 3 to 12 carbon atoms, or a copolymer comprising a structural unit derived from ethylene, a structural unit derived from an α-olefin having 3 to 12 carbon atoms and a structural unit derived from a nonconjugated diene.
As specific examples of the α-olefin having 3 to 12 carbon atoms, may be mentioned those mentioned as examples of the α-olefin for obtaining the specific addition copolymer.
As specific examples of the nonconjugated diene, may be mentioned those mentioned as examples of the nonconjugated diene for obtaining the specific addition copolymer.
The olefin copolymer having no functional group preferably has a weight average molecular weight of 1,000 to 3,000,000, more preferably 3,000 to 2,500,000, particularly preferably 5,000 to 2,000,000 in terms of polystyrene equivalent as measured by gel permeation chromatography using o-dichlorobenzene as a solvent.
When the olefin copolymer having no functional group is used, the proportion used thereof is preferably 1:99 to 99:1, more preferably 1:99 to 50:50, still more preferably 3:97 to 30:70 in terms of a weight ratio of the specific addition copolymer to the olefin copolymer having no functional group.

In the elastomer composition, may be further contained a filler or softening agent.
As specific examples of the filler, may be mentioned carbon black such as SRF (semi-reinforcing furnace), FEF (fast extrusion furnace), HAF (high abrasion furnace), ISAF (intermediate super abrasion furnace), SAF (super abrasion furnace), FT (fine thermal) and MT (medium thermal); and inorganic fillers such as white carbon, finely particulate magnesium silicate, calcium carbonate, clay and talc. These fillers may be used either singly or in any combination thereof.
The proportion of the filler used is generally 10 to 200 parts by weight, preferably 10 to 100 parts by weight per 100 parts by weight of the specific addition copolymer.

As specific examples of the softening agent, may be mentioned process oils such as aromatic oil, naphthenic oil and paraffin oil commonly used as compounding additives for rubber, vegetable oils such as coconut oil, and synthetic oils such as alkylbenzene oil. Among these, the process oils are preferred, with paraffin oil being particularly preferred. These softening agents may be used either singly or in any combination thereof.
The proportion of the softening agent used is generally 10 to 130 parts by weight, preferably 20 to 100 parts by weight per 100 parts by weight of the specific addition copolymer.

According to the (co)polymers of the present invention, the characteristic effects by having the silyl carboxylate residue are brought about.
A part of the silyl carboxylate residue in the (co)polymers according to the present invention may be hydrolyzed in the course of their production into a carboxyl group.
According to the (co)polymers of the present invention, the ester group in the silyl carboxylate residue can be hydrolyzed, thereby obtaining carboxyl group-containing (co)polymers having a structural unit represented by the following general formula (9) or a structural unit represented by the following general formula (10).

[Chemical 9]

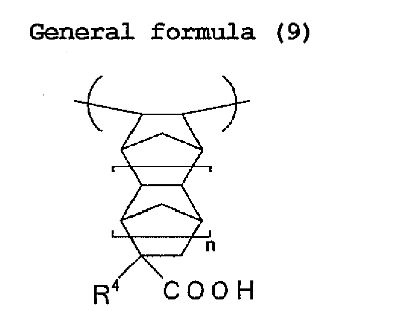

[In the general formula (9), n is 0 or 1, and R⁴ means a hydrogen atom, halogen atom or monovalent organic group.]

[Chemical 10]

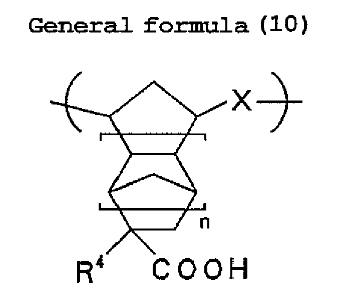

[In the general formula (10), n is 0 or 1, R⁴ means a hydrogen atom, halogen atom or monovalent organic group, and X denotes an ethylene or vinylene group.]

The hydrolyzing treatment is conducted by contact with water. However, an alcohol, acid or fluoride ion (R₄NF or the like) may also be used in place of water. When the hydrolyzing treatment is conducted with water, an acid such as hydrochloric acid, sulfuric acid, p-toluenesulfonic acid, trifluoromethanesulfonic acid or oxalic acid may also be used for the purpose of facilitating the reaction.

According to such a process, side reactions to a carboxyl group in the polymerization in the production of a (co)polymer having a carboxyl group can be avoided. Accordingly, the (co)polymer having a carboxyl group can be advantageously produced.

### EXAMPLES

The present invention will hereinafter be described specifically by the following Examples. However, the present invention is not limited to these examples.

<Synthesis Example 1 of specific cycloolefin compound>
A 300-mL three-necked flask sufficiently purged with nitrogen was charged with 15.0 g (68.7 mmol) of 4-methyltetracyclo[6.2.1.1^{3,6}.0^{2,7}]dodec-9-ene-4-carboxylic acid, 100 mL of dry tetrahydrofuran and 5.98 g (75.6 mmol) of dry pyridine, and 8.21 g (75.6 mmol) of trimethylchlorosilane was slowly added dropwise to this reaction system at a temperature of 0°C. After completion of the drop-wise addition, the resultant mixture was stirred for 5 hours at room temperature. After the reaction mixture was then filtered, and the resultant filtrate was concentrated, 50 ml of n-hexane was added, followed by stirring for 1 hour. Thereafter, the resultant solution was filtered. The resultant filtrate was then concentrated and distilled under reduced pressure under conditions of 129 to 132°C and 3 mmHg, thereby obtaining trimethylsilyl 4-methyl-tetracyclo[6.2.1.1^{3,6}.0^{2,7}]dodec-9-ene-4-carboxylate represented by the following structural formula (a).

[Chemical 11]

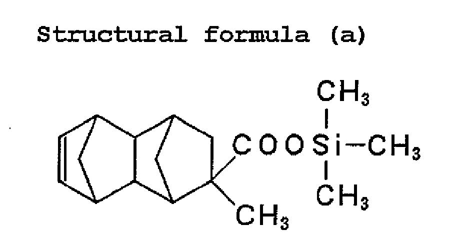

<Synthesis Example 2 of specific cycloolefin compound>
The same process as in Synthesis Example 1 of specific cycloolefin compound except that triethylchlorosilane was used in place of trimethylchlorosilane, and the conditions of the distillation under reduced pressure were changed to 143 to 147°C and 1.5 mmHg was performed, thereby obtaining triethylsilyl 4-methyltetracyclo[6.2.1.1^{3,6}6. 0^{0,7}]- dodec-9-ene-4-carboxylate represented by the following structural formula (b).

[Chemical 12]

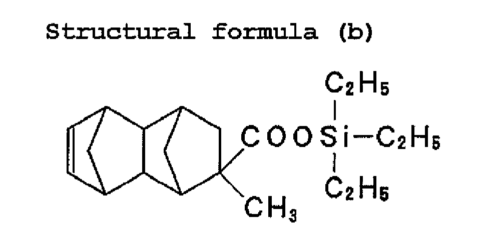

<Synthesis Example 3 of specific cycloolefin compound>
The same process as in Synthesis Example 1 of specific cycloolefin compound except that tert-butyldimethylchlorosilane was used in place of trimethylchlorosilane, and the conditions of the distillation under reduced pressure were changed to 145 to 149°C and 2.5 mmHg was performed, thereby obtaining tert-butyldimethylsilyl 4-methyltetracyclo[6.2.1.1^{3,6}.0^{3,7}]-dodec-9-ene-4-carboxylate represented by the following structural formula (c).

[Chemical 13]

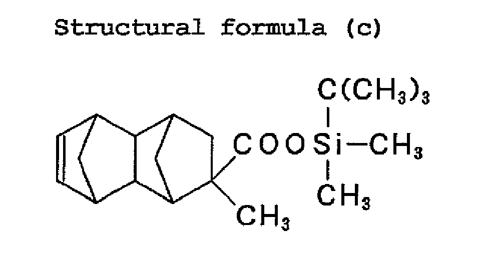

<Example 1>
A 2L separable flask purged with nitrogen was charged with 1,000 mL of hexane as a solvent, 3.5 mL of a 1.0 mol/L hexane solution of trimethylsilyl 4-methyl-tetracyclo[6.2.1.1^{3,6}.0^{2,7}]dodec-9-ene-4-carboxylate and 2 ml of 5-ethylidene-2-norbornene, and a gaseous mixture of ethylene (feed rate: 5.0 L/min)/propylene (feed rate: 4.5 L/min)/hydrogen (feed rate: 0.6 L/min) was continuously fed to the resultant mixture at 28°C. After 5 minutes, 3.66 mL of a 0.32 mol/L hexane solution of VOCl₃ was added into the 2L separable flask, and after additional 5 minutes, 20.7 mL of a 0.41 mol/L hexane solution of Al₂(C₂H₅)₃Cl₃) was added into the 2L separable flask to start an addition-copolymerizing treatment of the monomers. After the addition- copolymerizing treatment was conducted under conditions of 25°C for 10 minutes, 4.8 mL of acetic acid was added to the reaction system to terminate the polymerization reaction.
After the resultant polymer solution was washed with 500 mL of water, it was poured into a great amount of methanol to precipitate a copolymer, and this copolymer was vacuum dried, thereby obtaining 24.1 g of a white copolymer.
This copolymer was analyzed. As a result, it was found that the content of the structural unit derived from ethylene was 72.45 mol%, the content of the structural unit derived from propylene was 26.16 mol%, the content of the structural unit derived from 5-ethylidene-2-norbornene was 1.02 mol%, and the content of the structural unit derived from trimethylsilyl 4-methyltetracyclo[6.2.1.1^{3,6}.0^{2,7}]dodec-9-ene-4-carboxylate was 0.37 mol%.
Its weight average molecular weight (Mw) in terms of polystyrene equivalent as measured by gel permeation chromatography using o-dichlorobenzene as a solvent was 29.0 x 10⁴.
An infrared absorption spectrum of the copolymer thus obtained is shown in Fig. 1.

<Example 2>
A white copolymer was obtained in an amount of 30.8 g in the same manner as in Example 1 except that no 5-ethylidene-2-norbornene was added.
This copolymer was analyzed. As a result, it was found that the content of the structural unit derived from ethylene was 67.5 mol%, the content of the structural unit derived from propylene was 32.14 mol%, and the content of the structural unit derived from trimethylsilyl 4-methyltetracyclo[6.2.1.1^{3,6}.0^{2,7}]dodec-9-ene-4-carboxylate was 0.33 mol%.
Its weight average molecular weight (Mw) in terms of polystyrene equivalent as measured by gel permeation chromatography using o-dichlorobenzene as a solvent was 31.6 x 10⁴.

<Example 3>
The copolymer obtained in Example 1 was subjected to a hydrolyzing treatment by dissolving 20 g of the copolymer in 1,000 mL of toluene, adding 40 mL of hydrochloric acid to this solution and stirring the solution for 3 hours. After the resultant reaction solution was then washed with 500 mL of water, it was poured into a great amount of methanol to precipitate the copolymer, and the copolymer was vacuum dried, thereby obtaining 19 g of a white copolymer. This copolymer was subjected to infrared absorption spectroscopy. As a result, it was confirmed that a peak due to Si-O at 850 cm⁻¹ disappeared, and absorption due to a carboxyl group appeared at 1,700 cm⁻¹.
In this copolymer, it was found that the content of the structural unit derived from ethylene was 72.45 mol%, the content of the structural unit derived from propylene was 26.16 mol%, the content of the structural unit derived from 5-ethylidene-2-norbornene was 1.02 mol%, and the content of the carboxyl group-containing structural unit was 0.37 mol%.
Its weight average molecular weight (Mw) in terms of polystyrene equivalent as measured by gel permeation chromatography using o-dichlorobenzene as a solvent was 29.0 x 10⁴.

<Example 4>
A reactor purged with nitrogen was charged with 12.5 g (43.2 mmol) of trimethylsilyl 4-methyl-tetracyclo[6.2.1.1^{3,6}.0^{2,7}]dodec-9-ene-4-carboxylate as a specific monomer, 0.27 g of 1-hexene as a molecular weight modifier and 51.5 g of toluene as a solvent, and the reaction system was heated to 80°C. To this reaction system, were added 0.13 mL of a toluene solution (0.6 mol/L) of triethylaluminum and 0.34 mL of a toluene solution (0.025 mol/L) of methanol-modified tungsten hexachloride as polymerization catalysts, and the monomer was subjected to a ring-opening-polymerizing treatment under conditions of 80°C for 4 hours, thereby obtaining a polymer solution containing a ring-opened polymer.
The resultant polymer solution was placed in an autoclave, and 300 g of toluene was additionally added to this polymer solution. RuHCl(CO) [P(C₆H₅)₃]₃ as a hydrogenation catalyst was then added to the reaction system in an amount of 2,500 ppm to the charged amount of the monomer to conduct a hydrogenation reaction under conditions that a hydrogen gas pressure was 9 to 10 MPa, a reaction temperature was 160 to 165°C, and the reaction conditions were 4 hours. After completion of the reaction, the resultant reaction solution was poured into a great amount of methanol, thereby obtaining a hydrogenated product of the ring-opened polymer.
As a result that the hydrogenated ring-opened polymer thus obtained was analyzed, it was found that the hydrogenation rate was 99%, and its weight average molecular weight (Mw) in terms of polystyrene equivalent as measured by gel permeation chromatography using tetrahydrofuran as a solvent was 13.5 x 10⁴.

<Example 5>
A reactor purged with nitrogen was charged with 6.27 g (21.6 mmol) of trimethylsilyl 4-methyl-tetracyclo[6.2.1.1^{3,6}.0^{2,7}]dodec-9-ene-4-carboxylate, 5.01 g (21.6 mmol) of methyl 4-methyltetracyclo[6.2.1.1^{3,6}.0^{2,7}]-dodec-9-ene-4-carboxylate, 0.27 g of 1-hexene as a molecular weight modifier and 51.5 g of toluene as a solvent, and the reaction system was heated to 80°C. To this reaction system, were added 0.13 mL of a toluene solution (0.6 mol/L) of triethylaluminum and 0.34 mL of a toluene solution (0.025 mol/L) of methanol-modified tungsten hexachloride as polymerization catalysts to conduct a reaction for 4 hours at 80°C, thereby obtaining a polymer solution containing a ring-opened copolymer.
The resultant polymer solution was subjected to a hydrogenation reaction in the same manner as in Example 4 to obtain a hydrogenated product of the ring-opened copolymer.
As a result that the hydrogenated ring-opened copolymer thus obtained was analyzed, it was found that the content of the structural unit derived from trimethylsilyl 4-methyl- tetracyclo[6.2.1.1^{3,6}.0^{2,7}]dodec-9-ene-4-carboxylate was 43 mol%, the content of the structural unit derived from methyl 4-methyltetracyclo[6.2.1.1^{3,6}.0^{2,7}]-dodec-9-ene-4-carboxylate was 57%, the hydrogenation rate was 99%, and its weight average molecular weight (Mw) in terms of polystyrene equivalent as measured by gel permeation chromatography using tetrahydrofuran as a solvent was 14.3 x 10⁴.

<Example 6>
A white copolymer was obtained in an amount of 21.1 g in the same manner as in Example 1 except that triethylsilyl 4-methyltetracyclo[6.2.1.1^{3,6}.0^{2,7}]dodec-9-ene-4-carboxylate was used in place of trimethylsilyl 4-methyl-tetracyclo[6.2.1.1^{3,6}.0^{2,7}]dodec-9-ene-4-carboxylate.
This copolymer was analyzed. As a result, it was found that the content of the structural unit derived from ethylene was 73.18 mol%, the content of the structural unit derived from propylene was 25.50 mol%, the content of the structural unit derived from 5-ethylidene-2-norbornene was 0.94 mol%, and the content of the structural unit derived from triethylsilyl 4-methyltetracyclo[6.2.1.1^{3,6}.0^{2,7}]dodec-9-ene-4-carboxylate was 0.38 mol%.
Its weight average molecular weight (Mw) in terms of polystyrene equivalent as measured by gel permeation chromatography using o-dichlorobenzene as a solvent was 25.5 x 10⁴.

<Example 7>
A white copolymer was obtained in an amount of 17.7 g in the same manner as in Example 1 except that tert-butyldimethylsilyl 4-methyltetracyclo[6.2.1.1^{3,6}.0^{2,7}]dodec-9-ene-4-carboxylate was used in place of trimethylsilyl 4-methyltetracyclo[6.2.1.1^{3,6}.0^{2,7}]dodec-9-ene-4-carboxylate.
This copolymer was analyzed. As a result, it was found that the content of the structural unit derived from ethylene was 74.36 mol%, the content of the structural unit derived from propylene was 22.95 mol%, the content of the structural unit derived from 5-ethylidene-2-norbornene was 2.30 mol%, and the content of the structural unit derived from tert-butyldimethylsilyl 4-methyltetracyclo-[6.2.1.1^{3,6}.0^{2,7}]dodec-9-ene-4-carboxylate was 0.39 mol%.
Its weight average molecular weight (Mw) in terms of polystyrene equivalent as measured by gel permeation chromatography using o-dichlorobenzene as a solvent was 22.2 x 10⁴.

<Example 8>
A white copolymer was obtained in an amount of 9 g in the same manner as in Example 3 except that the 10 g of the copolymer obtained in Example 6 was used in place of 20 g of the copolymer obtained in Example 1.
This copolymer was subjected to infrared absorption spectroscopy. As a result, it was confirmed that a peak due to Si-O at 850 cm⁻¹ disappeared, and absorption due to a carboxyl group appeared at 1,700 cm⁻¹.
This copolymer was analyzed. As a result, it was found that the content of the structural unit derived from ethylene was 73.20 mol%, the content of the structural unit derived from propylene was 25.49 mol%, the content of the structural unit derived from 5-ethylidene-2-norbornene was 0.93 mol%, and the content of the structural unit containing the carboxyl group was 0.38 mol%.
Its weight average molecular weight (Mw) in terms of polystyrene equivalent as measured by gel permeation chromatography using o-dichlorobenzene as a solvent was 25.0 x 10⁴.

<Example 9>
A white copolymer was obtained in an amount of 9 g in the same manner as in Example 3 except that the 10 g of the copolymer obtained in Example 7 was used in place of 20 g of the copolymer obtained in Example 1, and in the hydrolyzing treatment, a process comprising adding 40 mL of hydrochloric acid and stirring the resultant mixture for 2 hours was conducted 4 times in total (conducting the stirring for 8 hours in total) in place of the process comprising adding 40 mL of hydrochloric acid and stirring the resultant mixture for 3 hours.
This copolymer was subjected to infrared absorption spectroscopy. As a result, it was confirmed that a peak due to Si-O at 930 cm⁻¹ disappeared, and absorption due to a carboxyl group appeared at 1,700 cm⁻¹.
This copolymer was analyzed. As a result, it was found that the content of the structural unit derived from ethylene was 74.37 mol%, the content of the structural unit derived from propylene was 22.95 mol%, the content of the structural unit derived from 5-ethylidene-2-norbornene was 2.29 mol%, and the content of the structural unit containing carboxyl group was 0.39 mol%.
Its weight average molecular weight (Mw) in terms of polystyrene equivalent as measured by gel permeation chromatography using o-dichlorobenzene as a solvent was 22.0 x 10⁴.

## Claims

1. A (co)polymer comprising a structural unit represented by the following general formula (1):
[Chemical 1] 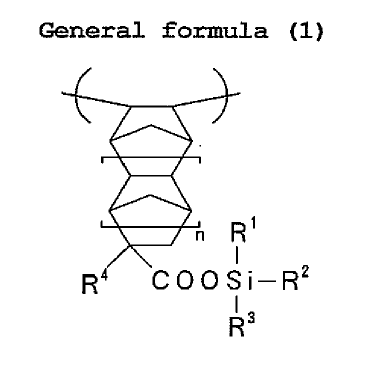 wherein n is 0 or 1, and R¹, R², R³ and R⁴ mean, independently of one another, a hydrogen atom, halogen atom or monovalent organic group.

2. A copolymer comprising the structural unit represented by the general formula (1) according to claim 1, a structural unit derived from ethylene and a structural unit derived from an α-olefin having 3 to 12 carbon atoms, and a structural unit derived from a nonconjugated polyene optionally used.

3. The copolymer according to claim 2, wherein the content of the structural unit represented by the general formula (1) is 0.01 to 30 mol%, the content of the structural unit derived from ethylene is 40 to 90 mol%, the content of the structural unit derived from the α-olefin having 3 to 12 carbon atoms is 5 to 60 mol%, and the content of the structural unit derived from the nonconjugated polyene is 0 to 12 mol%.

4. A (co)polymer comprising a structural unit represented by the following general formula (2):
[Chemical 2] 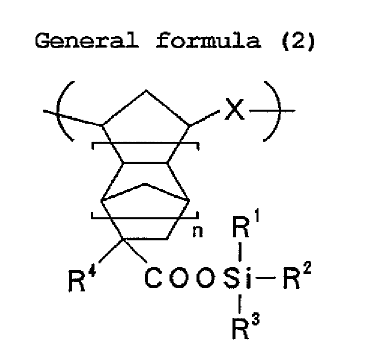 wherein n is 0 or 1, R¹, R², R³ and R⁴ mean, independently of one another, a hydrogen atom, halogen atom or monovalent organic group, and X denotes an ethylene or vinylene group.

5. A copolymer comprising the structural unit represented by the general formula (2) according to claim 4 and a structural unit derived from any other cycloolefin compound.

6. The (co)polymer according to any one of claims 1 to 5, wherein R¹, R² and R³ in the general formula (1) or the general formula (2) are, independently of one another, a hydrogen atom or a hydrocarbon group having 1 to 20 carbon atoms.

7. The (co)polymer according to any one of claims 1 to 6, wherein R⁴ in the general formula (1) or the general formula (2) is a methyl group.

8. The (co)polymer according to any one of claims 1 to 7, wherein n in the general formula (1) or the general formula (2) is 1.

9. A process for producing a (co)polymer, which comprises the step of addition-polymerizing a monomer comprising at least a compound represented by the following general formula (3):
[Chemical 3] 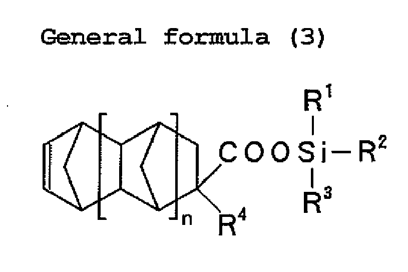 wherein n is 0 or 1, and R¹, R², R³ and R⁴ mean, independently of one another, a hydrogen atom, halogen atom or monovalent organic group.

10. A process for producing a copolymer, which comprises the step of addition-polymerizing the compound represented by the general formula (3) according to claim 9, ethylene and an α-olefin having 3 to 12 carbon atoms, and a nonconjugated polyene optionally used.

11. A process for producing a (co)polymer, which comprises the step of ring-opening-polymerizing a monomer comprising at least the compound represented by the general formula (3) according to claim 9.

12. A process for producing a copolymer, which comprises the step of ring-opening-polymerizing a monomer comprising the compound represented by the general formula (3) according to claim 9 and another cycloolefin compound copolymerizable with this compound.

13. A process for producing a carboxyl group-containing (co)polymer, which comprises the step of subjecting an ester group of the (co)polymer according to any one of claims 1 to 8 to a hydrolyzing treatment.
